# EUROPÄISCHE PATENTSCHRIFT

(11) **EP 1 337 883 B1**
(45) Veröffentlichungstag und Bekanntmachung des Hinweises auf die Patenterteilung: **29.09.2004**
(21) Anmeldenummer: 01997715.6
(22) Anmeldetag: 21.11.2001
(51) Int. Cl.: G02B 6/38

(54) **STECKER FÜR LICHTWELLENLEITER MIT EINEM STECKERGEHÄUSE**
CONNECTOR FOR OPTICAL WAVEGUIDES COMPRISING A CONNECTOR HOUSING
CONNECTEUR POUR GUIDES D'ONDES OPTIQUES COMPRENANT UN BOITIER DE CONNECTEUR

(30) Priorität: 21.11.2000 DE 20019798 U; 21.11.2000 US 718446; 30.09.2001 DE 20116042 U
(43) Veröffentlichungstag der Anmeldung: 27.08.2003
(73) Patentinhaber: Euromicron Werkzeuge GmbH, 35756 Mittenaar (DE)
(72) Erfinder: THEIS, Hans, 35756 Mittenaar (DE); THEIS, Michael, 35756 Mittenaar (DE); HERR, Günter, 35630 Ehringshausen-Dreisbach (DE)
(74) Vertreter: Mierswa, Klaus
(86) Internationale Anmeldenummer: PCT/EP2001/013501
(87) Internationale Veröffentlichungsnummer: WO 2002/042818

(56) Entgegenhaltungen:
- US-A- 4 759 599
- US-A- 5 123 071
- US-A- 5 134 679
- PATENT ABSTRACTS OF JAPAN vol. 012, no. 477 (P-800), 14. Dezember 1988 (1988-12-14) & JP 63 193109 A (NIPPON TELEGR & TELEPH CORP), 10. August 1988 (1988-08-10)
- PATENT ABSTRACTS OF JAPAN vol. 012, no. 415 (P-781), 4. November 1988 (1988-11-04) & JP 63 151910 A (TOSHIBA CORP;OTHERS: 01), 24. Juni 1988 (1988-06-24)
- PATENT ABSTRACTS OF JAPAN vol. 011, no. 328 (P-629), 27. Oktober 1987 (1987-10-27) & JP 62 111215 A (FURUKAWA ELECTRIC CO LTD:THE;OTHERS: 01), 22. Mai 1987 (1987-05-22)

## Beschreibung

### Technisches Gebiet:

Die Erfindung betrifft einen Stecker für Lichtwellenleiter mit einem Steckergehäuse, an dessen hinterem Ende ein Lichtleiterbündel mit mindestens zwei Lichtwellenleiterfasern eingeführt ist und an dessen gegenüberliegendem vorderen Ende Ferrule austreten, in die je eine der Lichtwellenleiterfasern eingeführt ist, wobei die Ferrule in einem Ferrulegehäuse gehaltert sind, welches in ein zur Aufnahme des Ferrulegehäuses entsprechend geformtes Steckergehäuse eingelegt ist und die Ferrule federbelastet in ihrer Axialrichtung beweglich sind, wobei das Ferrulegehäuse aus einem Kerngehäuse und einem Kerninnengehäuse besteht, welche zur Aufnahme von zwei einzelnen Ferrulen ausgestaltet sind, wobei die Ferrule im Kerngehäuse gehaltert sind und die vorderen Enden der Ferrule das Kerngehäuse nach vorn durchragen und die hinteren Enden der Ferrule in das Kerninnengehäuse ragen, wobei Kerngehäuse und Kerninnengehäuse wenigstens teilweise ineinander gesteckt sind, und der Stecker zum Zusammenstecken mit einem den Stecker aufnehmenden Kupplungsgehäuse bestimmt ist, gemäß dem Oberbegriff des Anspruchs 1.

### Stand der Technik:

Gattungsgemäße Stecker des Standes der Technik sind prinzipiell gemäß dem Dokument US-PS 5,315,679 aufgebaut. Durch dieses Dokument ist ein Stecker für Lichtleiterkabel bekannt geworden, welcher aus einem Steckergehäuse aus zwei flächigen Halbschalen besteht, in dessen Inneren zwei Ferrule angeordnet sind. Die Ferrule sind einzeln in je einem geschlossenen Ferrulegehäuse beweglich gehaltert, wobei ein sogenanntes Zip-Cord-Kabel, welches zwei getrennte Lichtleitfasern beinhaltet, in zwei Einzelkabeln geführt ist. Jedes Kabel ist einzeln innerhalb des Steckergehäuses zum jeweiligen Ferrulegehäuse an die einzelnen Ferrule geführt, weshalb jedes Kabel einzeln und getrennt abgefangen und zugentlastet werden muß. Diese Art der Ferruleführung ist unter der Bezeichnung Simplex-Führung oder Simplexferrul bekannt und dadurch ausgezeichnet, dass je Ferrul ein separates Ferrulgehäuse vorhanden ist. Auch Doppelstecker oder Stecker mit mehr als zwei Ferrulen, 2n-Ferrulen, sind aus einzelnen Simplexferrulen zusammengesetzt.

Des Weiteren ist es bekannt, einen Doppelstecker aus zwei Ferrulen aufzubauen, deren Enden mit den Lichtleitfasern in einer gemeinsamen Stirnfläche oder Platte aus Kunststoff enden und darin eingegossen sind. Obwohl diese Anordnung eine größere Packungsdichte der einzelnen Stecker bzw. Ferrule erlaubt, besitzt ein derartiger Stecker den Nachteil, dass die einzelnen Ferrule aus Herstellungsgründen keine konvexe Kontaktform mehr aufweisen. Denn die Oberfläche eines Simplex-Ferruls besitzt bevorzugt eine konvexe Kontaktform unter einem Winkel zwischen 8 Grad bis 9 Grad (sog. angel-polishing-connector = apc-Kontaktierung). In diesem Fall trifft der an der Spitze konvex geformte Ferrul auf die Spitze des gleichermaßen konvex geformten Ferruls des gegenüberliegenden Steckers in der Kupplung, wobei dieser Ferrul um 180 Grad gegenüber dem erstgenannten Ferrul gedreht ist. Auf diese Weise wird sichergestellt, dass reflektiertes Störlicht weitestgehend unschädlich ist und nur zu einem Bruchteil in die Lichtleitfasern gelangen kann. Diese apc-Kontaktierung ist jedoch nur bei Einzelferrulen möglich.

Des Weiteren müssen Stecker gegen ungewolltes Abziehen durch unsachgemäße Behandlung gesichert sein. Es hat sich gezeigt, daß der Lösemechanismus auch dadurch gelöst werden kann, daß am Lichtleitkabel selbst stark gezogen wird, was die Verbindung zwischen Stecker und Kupplung nicht lösen soll.

Ein Stecker des Standes der Technik, welcher der eingangs genannten Gattung eines Steckers für Lichtwellenleiter angehört, ist durch die US-A-4 759 599 bekannt geworden. Ein weiterer ähnlicher Stecker ist durch die JP-A-63-193 109 bekannt geworden.

### Technische Aufgabe:

Der Erfindung liegt die Aufgabe zugrunde, einen Stecker der gattungsbildenden Art zu schaffen, der den Aufbau eines Doppelsteckers oder eines Mehrfach-Doppelsteckers ermöglicht, bei welchen die Vorteile des Einzelferruls erhalten bleiben, insbesondere die Möglichkeit der apc-Kontaktierung zweier gegenüberliegender Ferrule gegeben ist; des Weiteren soll der Stecker eine hohe Packungsdichte ermöglichen und eine zuverlässige Abzugssicherung aufweisen, so dass er nicht versehentlich durch Zug am Kabel abgezogen werden kann.

### Offenbarung der Erfindung und deren Vorteile:

Diese Aufgabe wird erfindungsgemäß bei einem Stecker für Lichtwellenleiter der eingangs genannten Gattung dadurch gelöst, dass das Kerninnengehäuse eine mit Durchgangslöchern versehene Quaderplatte umfaßt, auf deren Vorderseite ein in axialer Richtung des Steckers sich erstreckender Doppelzylinder mit den Durchgangslöchern aufgesetzt ist und an deren Rückseite zwei Führungszungen in axialer Richtung sich erstrecken zum Einführen in das hintere Aufnahmegehäuse, wobei Führungszungen und Aufnahmegehäuse gegenseitige Verrastungsmittel aufweisen.

Das Kerninnengehäuse des Steckers ist wenigstens teilweise in das Kerngehäuse eingesteckt, wobei auf der hintere Teil des Kerninnengehäuses in einem Aufnahmegehäuse aufgenommen ist, in welches das Lichtleiterbündel eingeführt ist, wobei das Kerngehäuse, das Kerninnengehäuse und das Aufnahmegehäuse in das Steckergehäuse gesteckt und dort schwimmend gehaltert sind.

In einer weiteren vorteilhaften Ausgestaltung Das Kerngehäuse des Steckers weist die Form eines Gehäusequaders mit Seitenwandungen und einer vorderen Stirnfläche auf, in der sich mittig zwei Durchgangslöcher für den Durchgang der Ferrule befinden, wobei der Gehäusequader zur Aufnahme der Ferrule nach hinten offen ist.

Das Kerninnengehäuse des Steckers umfaßt erfindungsgemäß eine mit Durchgangslöchern versehene Quaderplatte, auf deren Vorderseite ein in axialer Richtung des Steckers sich erstreckender Doppelzylinder mit zwei Durchgangslöchern aufgesetzt ist und an deren Rückseite zwei Führungszungen in axialer Richtung sich erstrecken zum Einführen in das hintere Aufnahmegehäuse, wobei die Führungszungen und das Aufnahmegehäuse gegenseitige Verrastungsmittel aufweisen.

Gemäß einer bevorzugten Ausführungsform sind die Verrastungsmittel Rastnasen und Rastfenster, wobei die Rastnasen an den Führungszungen angeordnet sind und das Aufnahmegehäuse die Form eines Gehäusequaders mit je ein Rastfenster aufweisenden Seitenwandungen besitzt, in welche die Rastnasen nach Einführen der Führungszungen in das Aufnahmegehäuse einzurasten imstande sind.

Insbesondere ermöglichen die Doppeleinheiten zur Halterung von immer gleichzeitig zwei Ferrulen den Aufbau von Mehrfach-Doppelsteckern, nämlich 2.n-Doppelsteckern, welche kompakt und erheblich kleiner aufgebaut sind als vergleichbare Stecker des Standes der Technik. Zum Aufbau eines Mehrfach-Doppelsteckers ist hierzu die Doppeleinheit aus vorderem Kerngehäuse und hinterem Kerninnengehäuse in identischer Weise mehrfach vorhanden, wobei die Doppeleinheiten in einem Aufnahmegehäuse nebeneinander angeordnet sind.

In diesem Fall besteht das Aufnahmegehäuse aus zwei übereinander angeordneten Gehäuseschalen, zwischen denen die Doppeleinheiten nebeneinander aufgereiht sind, wobei die Kerninnengehäuse in den Gehäuseschalen mittels Verrastung miteinander verrastet sind und Doppeleinheiten sowie Aufnahmegehäuse in ein Mehrfachsteckergehäuse gesteckt und darin schwimmend gehaltert sind, welches eine Mehrzahl von aneinandergereihten und miteinander verbundenen Doppelsteckergehäusen umfaßt. In einer weiteren Ausführungsform des Mehrfach-Doppelsteckers weisen die beiden äußeren Doppelsteckergehäuse des Mehrfachsteckergehäuses Laschen zum Lösen der Verriegelung durch Eindrücken der Laschen mit dem Aufnahmegehäuse auf.

In einer anderen bevorzugten Ausführungsform umfaßt das Kerninnengehäuse eine mit Durchgangslöchern versehene vordere Quaderplatte und statt der beiden Führungszungen eine von dieser in Richtung des Lichtwellenleiters parallel beabstandete, mit der vorderen Quaderplatte durch einen Verbindungssteg verbundene hintere Quaderplatte, wobei die seitliche bzw. vertikale Ausdehnung des Verbindungssteges geringer ist als seitliche bzw. vertikale Ausdehnung der hinteren Quaderplatte. Auf der Vorderseite der vorderen Quaderplatte ist ein in axialer Richtung des Steckers sich erstreckender Doppelzylinder mit den Durchgangslöchern aufgesetzt, welche zur Durchführung der Ferrule durch das Kerninnengehäuse dienen. Das Aufnahmegehäuse besteht aus zwei miteinander verrastbaren Halbschalen, wobei die Hauptflächen der beiden Halbschalen an ihren Innenseiten im Bereich des vorderen Endes des Aufnahmegehäuses jeweils eine Vertiefung aufweisen, welche bei miteinander verrasteten Halbschalen zur formschlüssigen Aufnahme der hinteren Quaderplatte imstande sind.

Das Aufnahmegehäuse besteht gemäß einer Ausführungsform eines erfindungsgemäßen Mehrfachsteckers aus zwei übereinander angeordneten Gehäuseschalen, zwischen denen die Doppeleinheiten nebeneinander aufgereiht sind, wobei die Doppeleinheiten sowie die Aufnahmegehäuse in ein Mehrfachsteckergehäuse gesteckt und darin schwimmend gehaltert sind, welches eine Mehrzahl von aneinandergereihten und miteinander verbundenen Doppelsteckergehäusen umfaßt.

Der erfindungsgemäße Stecker ist Teil eines Stecker-Kupplung-Systems, wobei beim Einstecken des Steckers in die Kupplung das Kerngehäuse mit seinem vorderen Ende aufgrund einer gegenseitiger Verrastung in der Kupplung verrastet.

Die gegenseitige Verrastung von Kerngehäuse und Kupplung bezüglich des Kerngehäuses kann eine Quernut umfassen, welche in der Schmalseite des Kerngehäuses verläuft, wobei die Kupplung ein Außenkupplungsgehäuse und ein Innenkupplungsgehäuse umfaßt, welches eine im wesentlichen quaderförmigen Platte aufweist, auf der sich zwei Arme senkrecht erheben, an deren Enden Rastnasen angeordnet sind, welche beim Einschieben des Kerngehäuses zwischen die beiden Arme des Innenkupplungsgehäuses in den Quernuten verrasten.

Das Innenkupplungsgehäuse kann ferner zwei innere Führungszylinder aufweisen, welche an den Stirnflächen offen sind und zur Aufnahme und Führung der in die Kupplung ragenden Endbereich der Ferrule dienen.

Erfindungsgemäß kann der Stecker mit einer Abzugssicherung gegen ungewolltes Abziehen des Steckers von der Kupplung versehen sein, wobei die Abzugssicherung aktivierbar und deaktivierbar ist. Hierzu umfaßt der Stecker mindestens eine durch je ein Kerngehäuse und ein Kerninnengehäuse gebildete Doppeleinheit und ist bei gegenseitiger Verrastung von Kerngehäuse und Kupplung das Steckergehäuse in Längsrichtung des Steckers gegenüber dem Kerngehäuse und der Kupplung zum Zweck der Aktivierung der Abzugssicherung in eine erste Stellung und zum Zweck der Deaktivierung der Abzugssicherung in eine zweite Stellung verschiebbar, wobei in der ersten Stellung, aktivierte Abzugssicherung, ein Teil der Wandung des Steckergehäuses im Bereich der Rastnasen so angeordnet ist, daß keine Auslenkbarkeit der Rastnasen der Arme aus den Quernuten heraus besteht, so daß die mechanische Verbindung zwischen Stecker und Kupplung durch Zug am Lichtleiter oder am Aufnahmegehäuse nicht lösbar ist. Ein Abziehen des Doppel- bzw. Mehrfachsteckers von der Kupplung ist somit erfindungsgemäß nicht möglich.

In der zweiten Stellung hingegen, deaktivierte Abzugssicherung, ist kein Teil der Wandung des Steckergehäuses im Bereich der Rastnasen angeordnet, so daß eine Auslenkbarkeit der Rastnasen der Arme aus den Quernuten heraus gegeben ist und die mechanische Verbindung zwischen Stecker und Kupplung durch Zug am Lichtleiter oder am Aufnahmegehäuse lösbar ist. Ein Abziehen des Doppel- bzw. Mehrfachsteckers von der Kupplung ist somit möglich.

Gemäß einer bevorzugten Ausführungsform ist in der zweiten Stellung des Steckergehäuses die Auslenkbarkeit der Rastnasen aus den Quernuten dadurch gegeben, daß die Arme mit ihren von der Kupplung abgewandten Endbereichen in Aussparungen der Wandung des Steckergehäuses einzugreifen imstande sind.

Nur der erfindungsgemäße Aufbau ermöglicht eine Miniaturierung des Steckers zum Zwecke der Übertragung optischer Information.

Mit der Erfindung wird in vorteilhafter Weise der Aufbau eines Doppelsteckers oder eines Mehrfach-Doppelsteckers ermöglicht, bei welchen die entscheidenden Vorteile des Einzelferruls erhalten bleiben und insbesondere die Möglichkeit der apc-Kontaktierung zweier sich in einer Kupplung gegenüberliegende Ferrule gegeben ist. Ein weiterer Vorteil der Erfindung besteht darin, dass der Stecker eine hohe Packungsdichte ermöglicht, was aufgrund der erfindungsgemäßen Doppeleinheiten möglich ist. Ebenso weist der Stecker eine zuverlässige Abzugssicherung auf, so dass er nicht versehentlich durch Zug am Lichtleitkabel abgezogen werden kann.

### Kurzbezeichnung der Zeichnung, in der zeigen:

- Figur 1a,b, c: schematische Schnittansichten des erfindungsgemäßen Steckers zur Darstellung der unterschiedlichen relativen Positionen der einzelnen Teile beim Einschieben des Steckers in eine Kupplung zur Darstellung der Funktionsweise einer erfindungsgemäßen abzugssicheren Verrastung,
- Figur 2: eine perspektivische Explosionsdarstellung eines Doppelsteckers zur Darstellung sämtlicher Einzelteile,
- Figur 3: einen Querschnitt durch zwei aneinandergefügte Kupplungen zur Aufnahme zweier gegenseitig eingesteckter Stecker,
- Figur 4: eine Draufsicht auf Figur 3 von oben,
- Figur 5: eine perspektivische Ansicht der Figur 3,
- Figur 6: eine perspektivische Ansicht einer Einzelkupplung gemäß der Figur 5,
- Figur 7: eine perspektivische Ansicht eines Innenkupplungsgehäuses innerhalb des Außenkupplungsgehäuses gemäß Figur 6,
- Figur 8: einen Längsschnitt durch einen Stecker mitsamt zwei Kupplungen,
- Figur 9: einen Längsschnitt durch zwei Stecker, welche in zwei Kupplungen gegenseitig gesteckt sind,
- Figur 10: eine perspektivische Explosionsdarstellung eines Mehrfach-steckergehäuses, nämlich achtfach, zur Darstellung der Einzelteile,
- Figur 11: eine Draufsicht auf eine Gehäuseschale des hinteren Aufnahmegehäuses,
- Figur 12: eine Ansicht der Stirnseite der Figur 11,
- Figur 13: eine Draufsicht auf ein Mehrfachsteckergehäuse,
- Figur 14: eine seitliche Draufsicht auf Figur 14,
- Figur 15: einen Schnitt längs der Linie C-C von Figur 13,
- Figur 16: einen Schnitt längs der Linie A-A von Figur 14,
- Figur 17: einen Schnitt längs der Linie B-B von Figur 14,
- Figur 18: eine Seitenansicht des Mehrfachsteckergehäuses der Figur 19,
- Figur 19: eine perspektivische Ansicht von Figur 13,
- Figur 20: eine Draufsicht auf eine zugehörige Mehrfachkupplung,
- Figur 21: einen Schnitt längs der Linie A-A von Figur 20,

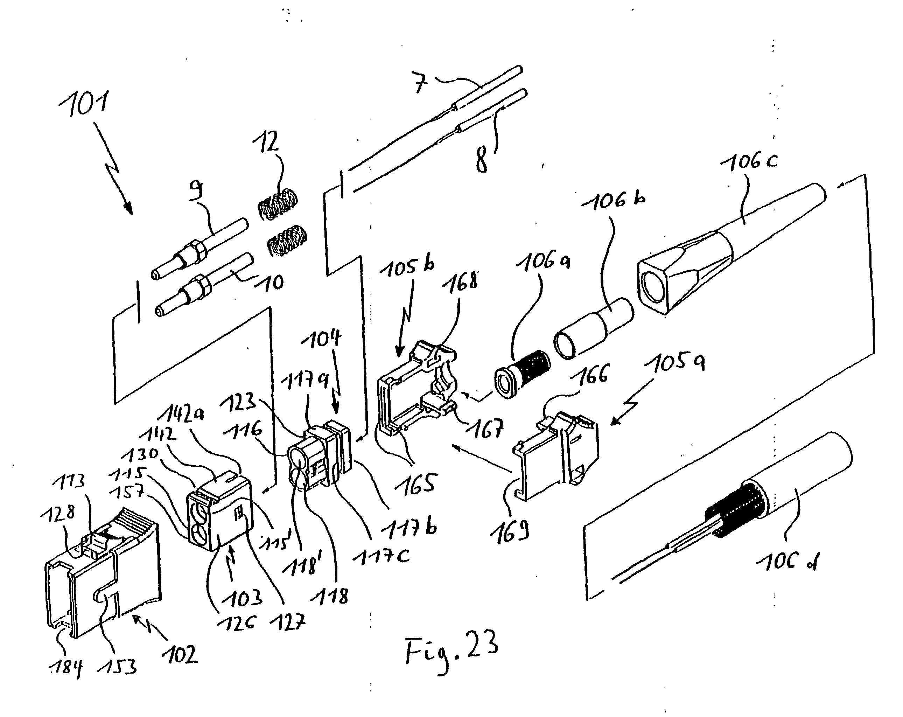

- Figur 22: einen Schnitt längs der Linie A-A des Teils 2 von Figur 2,
- Figur 23: eine perspektivische Explosionsdarstellung einer weiteren Ausführungdsform eines Doppelsteckers zur Darstellung sämtlicher Einzelteile,
- Figur 24: eine perspektivische Darstellung einer Halbschale gemaß einer weiteren Ausführungsform eines Aufnahmegehäuses,
- Figur 25a,b,c,d: verschiedene Darstellungen einer Halbschale gemäß einer weiteren Ausführungsform eines Aufnahmegehäuses,
- Figur 25e: eine perspektivische Darstellung der zu der Halbschale von Fig. 25a-d gehörenden anderen Halbschale,
- Figur 26: eine perspektivische Darstellung einer weiteren Ausführungsform eines Außenkupplungsgehäuses,
- Figur 27a,b,c: schematische Schnittansichten des von Fig. 23 Steckers zur Darstellung der unterschiedlichen relativen Positionen der einzelnen Teile beim Einschieben des Steckers in die Kupplung von Fig. 26 zur Darstellung der Funktionsweise einer erfindungsgemäßen abzugssicheren Verrastung
- Figur 28: eine perspektivische Explosionsdarstellung einer weiteren Ausführungsform eines Mehrfach-Steckers,
- Figur 29: eine Draufsicht auf eine Halbschale des Steckers von Fig. 28,
- Figur 30: eine perspektivische Darstellung zu dem Stecker von Fig. 28 passenden Mehrfach-Kupplung,
- Figur 31: eine perspektivische Darstellung des Steckers von Fig. 28, welcher mit der Kupplung von Fig. 30 verbunden ist, und
- Figur 32: eine Querschnittsdarstellung des Steckers von Fig. 28 und der Kupllung von Fig. 30 zur Darstellung der Funktionsweise einer erfindungsgemäßen abzugssicheren Verrastung.

### Wege zur Ausführung der Erfindung:

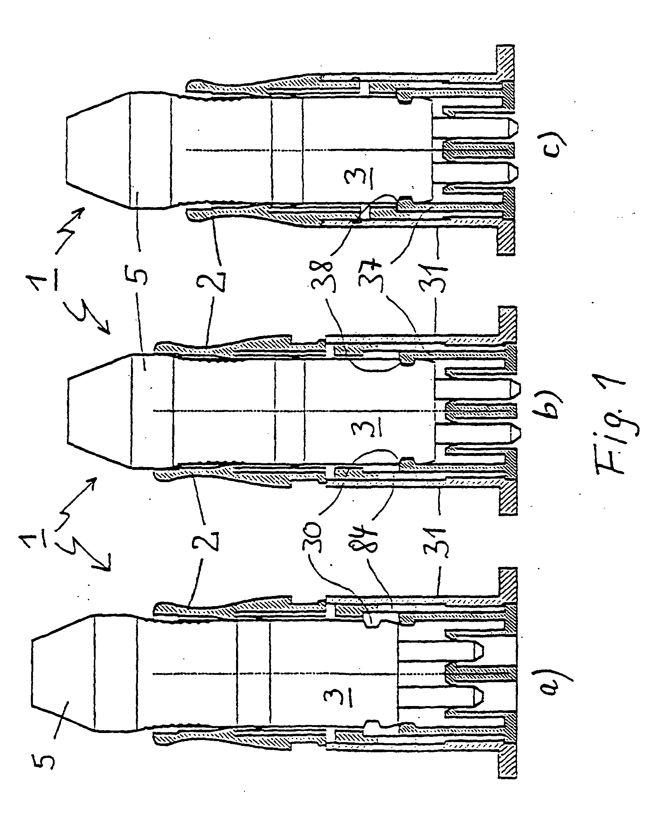

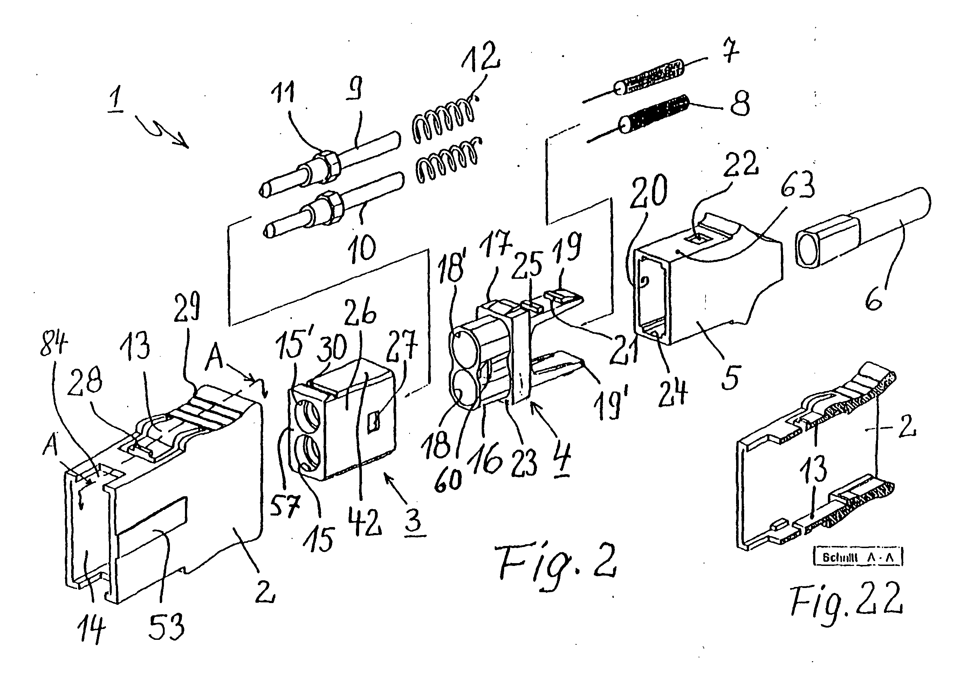

Die Fig. 1a, b, c zeigen schematisch den Vorgang des Einführens eines erfindungsgemäßen Doppelsteckers 1 in ein Außenkupplungsgehäuse 31. Der Doppelstecker 1 umfaßt das Aufnahmegehäuse 5, ein Kerninnengehäuse 4, ein Kerngehäuse 3 und ein im Querschnitt dargestelltes Steckergehäuse 2. Das Aufnahmegehäuse 5, das Kerninnengehäuse 4 und das Kerngehäuse. 3 sind in Fig. 1 zusammengefügt wie unter Bezug auf Fig. 2-9 noch erläutert wird, so daß lediglich die Quaderplatte 17 des Kerninnengehäuses 4 sichtbar ist, da der Rest desselben im Aufnahmegehäuse 5 bzw. im Kerngehäuse 3 aufgenommen ist. Das Steckergehäuse 2 ist über die Doppeleinheit 3-4 geschoben. In Fig. 1a ist der Doppelstecker 1 erst teilweise in das Außenkupplungsgehäuse 31 eingeschoben. Eine Verrastung des Doppelsteckers mit der Kupplung ist noch nicht gegeben. In Fig. 1b ist die aus der Doppeleinheit 3-4 und dem Aufnahmegehäuse 5 bestehende Baugruppe vollständig in die Kupplung eingeführt. Das Kerngehäuse 3 ist mittels der Quernuten 30 und der Rastnasen 38 mit dem Innenkupplungsgehäuse 32 verrastet. Diese Verrastung kann jedoch durch Zug am hinteren Aufnahmegehäuse oder am Lichtleiterbündel 6 (in Fig. 1 nicht gezeigt) mit geringer Kraft wieder gelöst werden, da die Rastnasen 38 unter Biegung der Arme 37 sehr leicht seitlich nach außen in die Aussparungen 84 und damit aus den Quernuten 30 heraus ausgelenkt werden können.

Nun wird das Steckergehäuse 2 in Richtung der Kupplung geschoben, bis es seinerseits mittels Rastnasen 28 und Rastfenstern 35 mit dem Außenkupplungsgehäuse 31 verrastet (Fig. 1c). Die Aussparungen 84 sind gegenüber Fig. 1b in Richtung der Kupplung verschoben und befinden sich nicht mehr im Bereich der Rastnasen 38. Die Verrastung zwischen Kerngehäuse 3 und Innenkupplungsgehäuse 32 kann nun nicht mehr durch Zug am Aufnahmegehäuse 5 oder am Lichtleiterbündel 6 (in Fig. 1 nicht gezeigt) gelöst werden, da die Rastnasen 38 nicht mehr seitlich aus den Quernuten 30 heraus ausgelenkt werden können. Die Verrastung zwischen Kerngehäuse 3 und Innenkupplungsgehäuse 32 ist in der in Fig. 1c gezeigten Stellung des Steckergehäuses 2 nicht lösbar und fungiert somit als Abzugssicherung. Stecker und Kupplung sind fest miteinander verriegelt. Eine Deaktivierung der Abzugssicherung und damit eine Entriegelung sind nur möglich, indem das Steckergehäuse 2 in Richtung des Lichtleiterbündels 6 zurückverschoben wird, also in die in Fig. 1b gezeigte Stellung. Hierzu wird zunächst Druck auf die Laschen 13 ausgeübt, wodurch die Rastnasen 28 aus den Rastfenstern 35 ausgelenkt werden, und anschließend das Steckergehäuse 2 in Richtung des Lichtleiterbündels 6 bewegt. Nun kann der Stecker 1 unter seitlicher Auslenkung der Rastnasen 38 wieder mit geringem Kraftaufwand von der Kupplung gelöst werden.

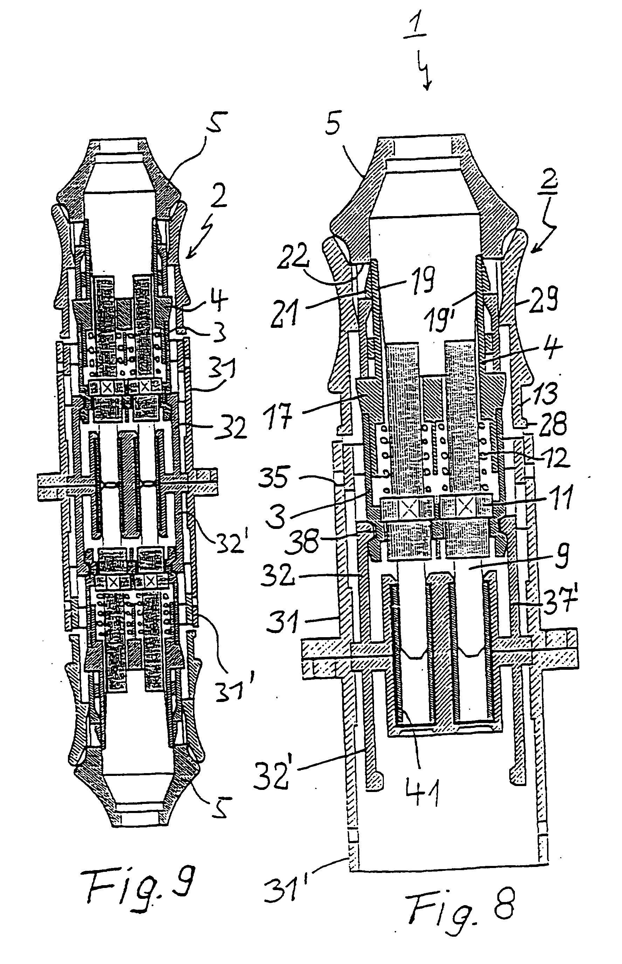

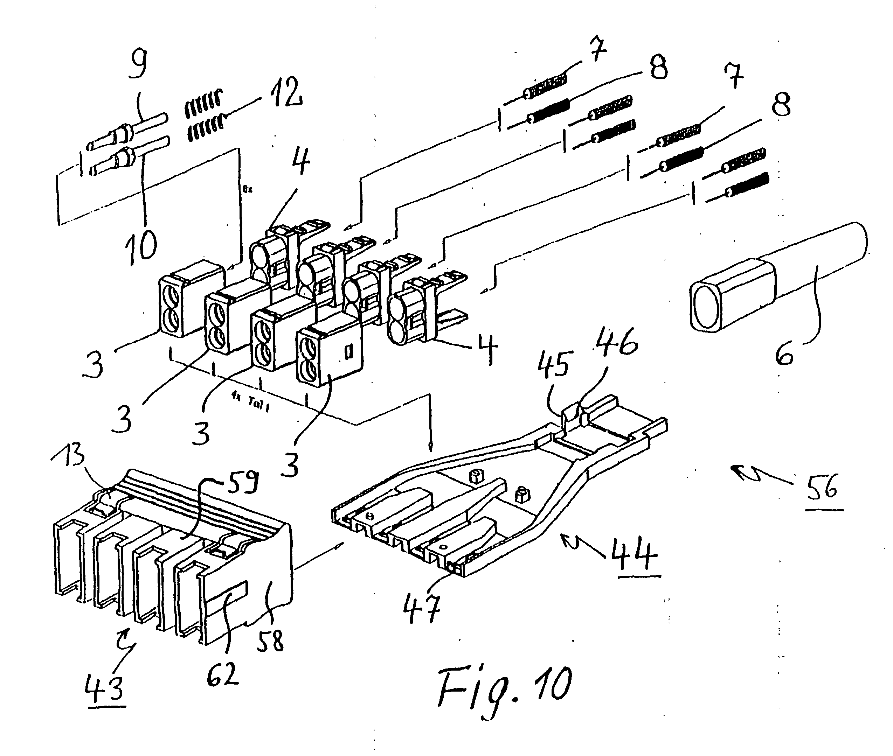

Gemäß den Figuren 2 bis 9 ist dort ein Doppelstecker dargestellt, welcher als wesentliche Teile aus einem Steckergehäuse 2, einem Kerngehäuse 3, einem Kerninnengehäuse 4 sowie einem Aufnahmegehäuse 5 besteht, in welches ein Lichtleiterbündel 6 eingeführt ist und welches auf das Kerninnengehäuse 4 folgt. Das Kerngehäuse 3 ist als Gehäusequader ausgeführt mit zwei sich gegenüberliegenden Breitseiten 26 und dazwischen angeordneten Schmalseiten 42 sowie einer nach vorn weisenden Stirnfläche 57, in der zwei übereinander angeordnete Durchgangslöcher 15, 15' angeordnet sind. Das Kerninnengehäuse 4 umfaßt eine Quaderplatte 17, welche auf ihrer vorderen Breitseite 23 einen Doppelzylinder 16 in Richtung der Längsachse des Steckers 1 trägt, wobei der Doppelzylinder 16 zwei Durchgangslöcher 18, 18' besitzt. Auf der gegenüberliegenden abgewandten Breitseite der Quaderplatte 17 ragen senkrecht zur derselben zwei beabstandete Führungszungen 19, 19' auf, welche auf ihren Außenseiten je einen quer verlaufenden Steg 25 sowie Rastnasen 21 aufweisen. Kerngehäuse 3 und Kerninnengehäuse 4 bilden eine sogenannte Doppeleinheit zur Aufnahme von zwei Ferrulen 9, 10, welche innerhalb dieser Doppeleinheit mittels Druckfedern 12 federbelastet gehaltert sind, wie es im Einzelnen in den Figuren 8 und 9 gezeigt ist.

Das Kerngehäuse 3 wie auch das Kerninnengehäuse 4 sind zur Aufnahme der beiden Ferrule 9, 10 ausgestaltet, wobei die Ferrule im Kerngehäuse 3 gehaltert sind, was insbesondere aus den Figuren 8 und 9 hervorgeht und die vorderen Enden der Ferrule 9, 10 die Stirnfläche 57 des Kerngehäuses nach vorn durchragen. Die hinteren Enden der Ferrule 9, 10 ragen in das Kerninnengehäuse 4, was ebenfalls aus Figur 8 zu entnehmen ist. Kerngehäuse 3 und Kerninnengehäuse 4 sind relativ wenigstens teilweise ineinandergesteckt und bilden dadurch die Doppeleinheit 3-4, wobei im gezeigten Beispiel das Kerninnengehäuse 4 mit seinem vorderen Teil in den Aufnahmeraum des Kerngehäuses 3 gesteckt ist. Mit dem Zusammenfügen von Kerngehäuse 3 und Kerninnengehäuse 4 steht das Kerngehäuse 3 auf der Breitseite 23 der vorderen Quaderplatte 17 des Kerninnengehäuses 4 auf, wie es aus Figur 8 hervorgeht. Der Doppelzylinder 16 auf der Quaderplatte 17 weist eine Rastnase 60 auf, welche beim Aufschieben des Kerngehäuses 3 oder Gehäusequaders auf den Doppelzylinder 16 in ein Rastfenster 27 innerhalb der Breitseite 26 des Kerngehäuses 3 bzw. des Gehäusequaders 3 einrastet.

Zur exakten Halterung der Ferrule 9, 10 besitzen diese in bekannter Weise eine fest angeordnete Drehsicherung 11, welche eine Mehrzahl von Schlüsselflächen trägt, aufgrund derselben die Ferrule in einer entsprechenden Winkelteilung entsprechend der Anzahl der Schlüsselflächen innerhalb des Kerngehäuses zu diesem positioniert werden kann. Die Ferrule 9, 10 sind dabei von hinten in das Kerngehäuse 3 eingesetzt und in entsprechend geformten Sitzen innerhalb des Kerngehäuses nebeneinander angeordnet und in axialer Richtung beweglich gehaltert, wobei je eine Druckfeder 12 von hinten auf die Ferrule 9, 10 aufgeschoben ist und mit ihrem vorderen Ende an der Drehsicherung 11 angreift.

Das hintere Ende der Druckfeder 12 stützt sich gegen einen inneren Absatz des Kerninnengehäuses 4 ab, wobei dieser innen umlaufende Absatz im Bereich der Quaderplatte 17 liegt, wie es aus Figur 8 zu entnehmen ist. Auf diese Weise können sich die Ferrule 9, 10 entgegen der Federkraft der Federn 12 etwas in axialer Richtung bewegen. Die hinteren Enden der Ferrule 9, 10 sind durch entsprechende Durchgangslöcher innerhalb der Quaderplatte 17 geführt und erstrecken sich längs zwischen den Führungszungen 19, 19', wie es ebenfalls aus der Figur 8 am besten hervorgeht.

Die Doppeleinheit 3-4 aus Kerngehäuse 3 und Kerninnengehäuse 4 ist in ein Aufnahmevolumen 20 eines hinteren Aufnahmegehäuses 5 gesteckt, welches ebenfalls im Wesentlichen als Gehäusequader gestaltet ist; in dieses Aufnahmegehäuse 5 ist von hinten ein Lichtleiterbündel 6 eingeführt. Das Lichtleiterbündel 6 weist mindestens zwei Lichtleiterfasern 7, 8 auf, wobei die Lichtleiterfasern 7, 8 durch die Ferrule 9, 10 an die Spitze derselben geführt sind.

Zum Zusammenbau von Kerngehäuse 3, Kerninnengehäuse 4 und Aufnahmegehäuse 5 wird nach der Montage der Lichtleiterfasern 7, 8 innerhalb der Ferrule 9, 10 die Doppeleinheit 3-4 mit den darin angeordneten Ferrulen 9, 10 in das Aufnahmevolumen 20 des Aufnahmegehäuses 5 gesteckt. Das Aufnahmegehäuse 5 weist innen in den Schmalseiten 63 Führungsnuten 24 auf, in denen beim Einschieben der Führungszungen 19, 19' die Rastnasen 21 sowie die quer verlaufenden Stege 25 entlanggleiten, wobei in der Endstellung die Rastnasen 21 innerhalb von in den Schmalseiten 63 des Aufnahmegehäuses 5 befindliche Rastfenster 22 einrasten. Dann sitzt der äußere, stirnseitige Rand des Aufnahmegehäuses bzw. Gehäusequaders auf der hinteren Breitseite der Quaderplatte 17 auf, wie es der Figur 8 zu entnehmen ist.

Die Doppeleinheit 3-4 zusammen mit dem Aufnahmegehäuse 5 werden in ein Steckergehäuse 2 eingeführt, welches ebenfalls im Wesentlichen als Gehäusequader ausgeführt ist mit zwei sich gegenüberliegenden großen Gehäuseflächen und zwei dazwischen angeordneten Schmalseiten; das Steckergehäuse 2 ist an seinen beiden Stirnseiten offen Das Kerngehäuse 3, das Kerninnengehäuse 4 und das Aufnahmegehäuse 5 sind im Steckergehäuse 2 schwimmend gehaltert.

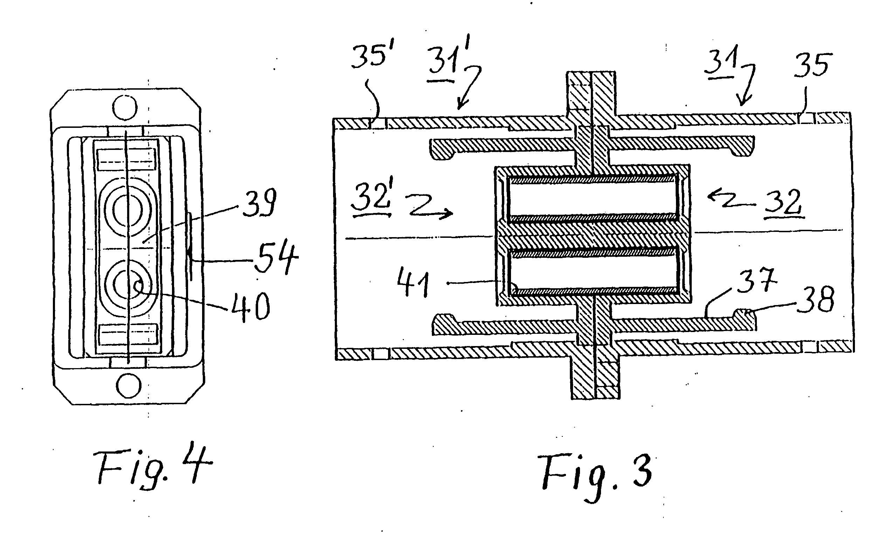

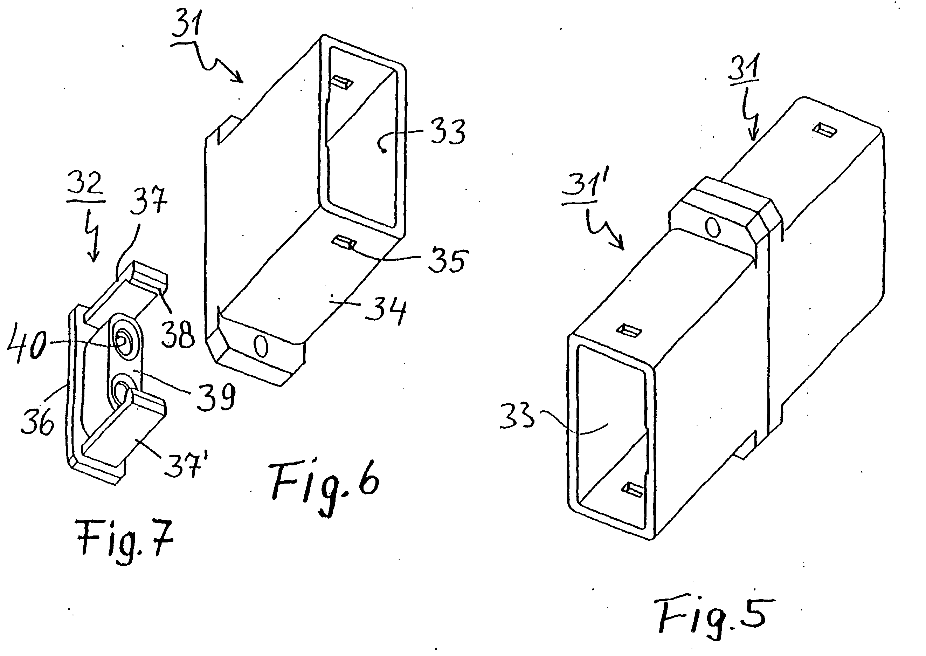

Beim Einstecken des Steckers 1 in eine Kupplung verrastet das Kerngehäuse 3 mit seinem vorderen Ende aufgrund einer gegenseitigen Verrastung innerhalb der Kupplung, was insbesondere in den Figuren 3 bis 9 dargestellt ist. Eine einzelne Kupplung besteht aus einem Außenkupplungsgehäuse 31, 31', in welches ein Innenkupplungsgehäuse 32, 32' eingesetzt ist. Beide Teile, nämlich Außenkupplungsgehäuse 31, 31' wie Innenkupplungsgehäuse 32, 32', sind vorzugsweise doppelt vorhanden, wie es den Figuren 3, 5 und 9 zu entnehmen ist, wenn mittels zweier identischer Stecker 1 eine Fortführung einer Lichtwellenleiterverbindung geschaffen werden soll. In das Aufnahmevolumen 33 des Außenkupplungsgehäuses 31, 31' kann das Steckergehäuse 2 eingeschoben werden, wozu die Innenkontur des Aufnahmevolumens 33 des Außenkupplungsgehäuses 31, 31' und die Außenkontur des Steckergehäuses 2 entsprechend geformt sind.

Innerhalb eines jeden Außenkupplungsgehäuses 31, 31' ist ein Innenkupplungsgehäuse 32, 32' angeordnet, welches gemäß der Figur 7 aus einer Platte 36 besteht, auf der mittig ein länglich-ovales Aufnahmeteil 39 mit zwei Durchgangslöchern 40 angeordnet ist, wobei die Platte 36 mit den Durchgangslöchern 40 fluchtende Löcher aufweist. Des Weiteren erheben sich auf der Platte 36 zwei sich im Abstand gegenüberstehende Arme 37, 37', zwischen denen sich das Aufnahmeteil 39 befindet, wobei die Arme 37, 37' an ihren freien Enden Rastnasen 38 aufweisen. Wie es aus der Figur 8 zu entnehmen ist, greifen diese Rastnasen 38 beim Vorschieben des Steckers 1 in das Außenkupplungsgehäuse 31, 31' in die innerhalb der Schmalseiten 42 des Kerngehäuses 3 quer verlaufende Quernuten 30 ein und verrasten darin. Auf diese Weise wird die Doppeleinheit 3-4 sicher innerhalb des Innenkupplungsgehäuses 32, 32' gehaltert.

Eine weitere bevorzugte Ausführungsform eines Steckers 56 ist in den Figuren 10 bis 21 dargestellt, welche einen Mehrfach-Doppelstecker 56 mit einem achtfachen Mehrfachsteckergehäuse zeigen. Im Wesentlichen setzt sich ein Mehrfach-Doppelstecker aus einer Mehrzahl von Doppelsteckern zusammen, wobei jeweils die Doppeleinheit 3-4 aus Kerngehäuse 3 und Kerninnengehäuse 4 vorhanden und gleich ausgeführt sind. Damit sind zum Aufbau eines Mehrfach-Doppelsteckers 56 die Doppeleinheit 3-4 aus Kerngehäuse 3 und Kerninnengehäuse 4 in identischer Weise mehrfach vorhanden, wobei die Doppeleinheiten 3-4 in einem Aufnahmegehäuse, umfassend eine untere Gehäuseschale 44 und eine (nicht gezeigte) obere Gehäuseschale, nebeneinander angeordnet sind. Das Aufnahmegehäuse, in welches von hinten das Lichtleiterbündel 6 eingeführt ist, kann vorzugsweise gegenüber dem Aufnahmegehäuse 5 des Doppelsteckers 1 modifiziert ausgeführt sein.

Vorzugsweise sind zum Aufbau eines Mehrfach-Doppelsteckers die Doppelstecker n-mal vorhanden. Allerdings sind ebenso Ausführungen möglich und für Sonderanwendungen sinnvoll, in denen beispielsweise drei Einzelferrule in einem Dreier-Kerngehäuse sowie einem Dreier-Kerninnengehäuse angeordnet sind, wobei die Ferrule nebeneinander oder übereinander angeordnet sein können.

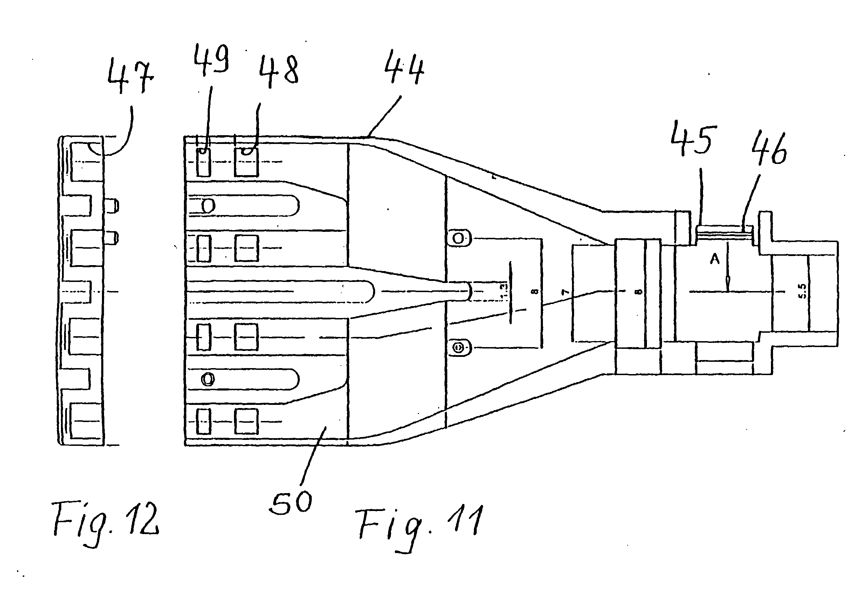

Bei dem beispielhaft gezeigten Mehrfach-Doppelstecker 56 besteht das Aufnahmegehäuse aus zwei übereinander angeordneten Gehäuseschalen, von denen nur die untere dargestellt ist und zwischen denen die Doppeleinheiten 3-4, wie sie für die Ausführung des Doppelsteckers 1 beschrieben sind, nebeneinander aufgereiht sind. Die Kerninnengehäuse 4 in den beiden Gehäuseschalen 44 können mittels einer Verrastung 21, 48, 49 (Fig. 11) miteinander verrasten. Die Doppeleinheiten 3-4 sowie die Aufnahmegehäuse 5 sind in ein Mehrfachsteckergehäuse 43 gesteckt und darin schwimmend gehaltert, wobei das Mehrfachsteckergehäuse 43 eine Mehrzahl von aneinandergereihten und miteinander verbundenen Doppelsteckergehäusen 58, 59 umfasst. Die innen liegenden Doppelsteckergehäuse 59 sind identisch ausgeführt, die jeweiligen randseitigen Doppelsteckergehäuse 58 sind zueinander sysmmterisch ausgeführt.

Die Figuren 11 und 12 zeigen eine Draufsicht auf die untere Gehäuseschale 44 des Aufnahmegehäuses sowie eine Ansicht der Stirnseite der unteren Gehäuseschale 44 eines Mehrfach-Doppelsteckers 56. In der inneren Hauptseite 50 einer jeden Gehäuseschale 44 sind voneinander beabstandete Aufnahmenuten 47 ausgebildet, welche auf ihren Bodenflächen Rastfenster 48 und 49 aufweisen. Die Aufnahmenuten 47 dienen zur Aufnahme je einer Doppeleinheit 3-4, wobei der Steg 25 (Figur 2) im Rastfenster 49 und die Rastnase 21 im Rastfenster 48 einrasten. Die untere Gehäuseschale 44 weist an ihrem hinteren, sich verjüngenden Ende, in welches das Lichtleiterbündel 6 eingeführt ist, Verrastungsmittel für die (nicht gezeigte) obere Gehäuseschale auf, welche beispielsweise aus je einer Führungszunge 45 mit einer daran angeordneten Rastnase 46 bestehen.

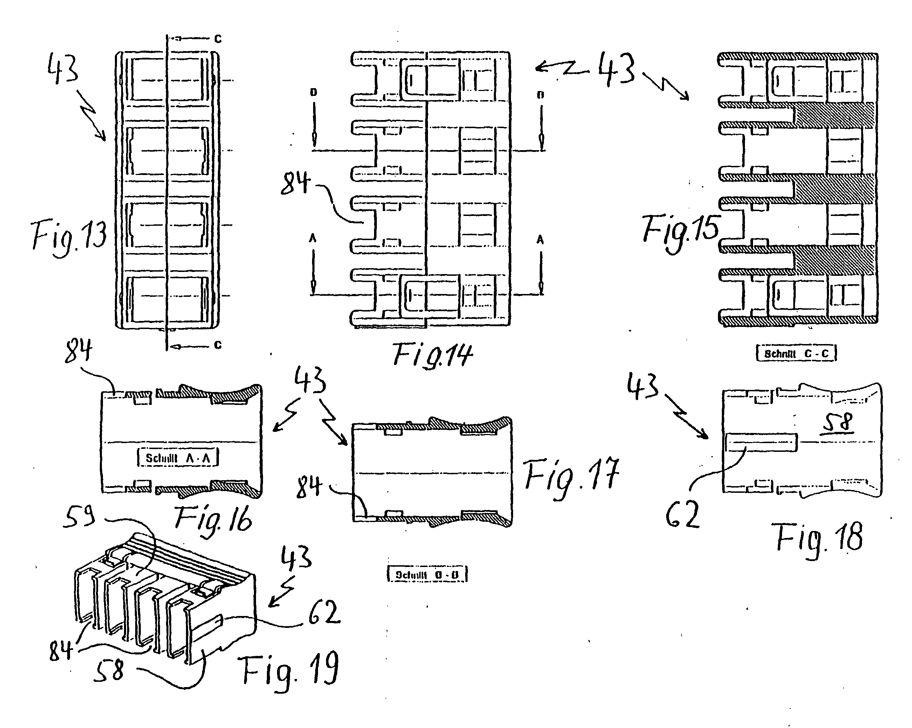

Die Figuren 13 bis 19 zeigen in verschiedenen Darstellungen und Schnitten das Mehrfachsteckergehäuse 43 eines Mehrfach-Doppelsteckers 56. Die einzelnen Doppelsteckergehäuse 58 und 59 sind an ihren vorderen, der Kupplung zugewandten Ende voneinander beabstandet und an ihren hinteren, der Kupplung abgewandten Ende zusammengefaßt, was aus den Figuren 10 und 19 ersichtlich ist.

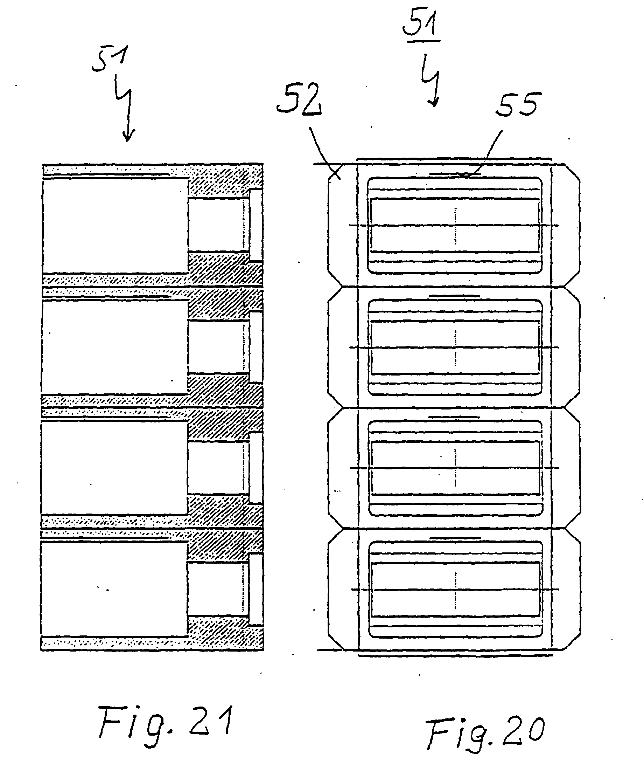

In der Figur 20 ist eine Draufsicht, in der Figur 21 ein Schnitt längs der Linie A-A von Figur 20 einer Mehrfachkupplung gezeigt, welche einem Mehrfach-Doppelsteckers 56 zugeordnet ist. Eine derartige Mehrfachkupplung besteht wiederum aus einem Außenkupplungsgehäuse 51, welches eine Mehrzahl von Aufnahmeteilen 52 entsprechend einem Außenkupplungsgehäuse für einen Doppelstecker umfaßt. Diese Mehrzahl von Aufnahmeteilen 52 ist zu einem Block zusammengefaßt, der ein integriertes Außenkupplungsgehäuse 51 ausbildet. In jedem einzelnen Aufnahmeteil 52 des Außenkupplungsgehäuses 51 ist ein Innenkupplungsgehäuse 32, 32' entsprechend der Figur 7 angeordnet. Man erkennt aus Figur 20, ebenso wie aus den Figuren 3 und 6, dass die Innenwandung des Außenkupplungsgehäuses 31 bzw. des einzelnen Aufnahmeteils 52 in der Breitseite eine Führungsnut 55, 64 aufweist. In diese jeweilige Führungsnut 55, 64 gleitet beim Einführen des Steckergehäuses 2 bzw. des Mehrfachsteckergehäuses 43 in das zugehörige Außenkupplungsgehäuse 31, 31' bzw. 51 ein erhöhter Längssteg 53 bzw. 62 zur Führung innerhalb der Kupplung hinein, wobei der Längssteg 53 bzw. 62 auf wenigstens einer der äußeren Breitseiten des Steckergehäuses 2 bzw. des Mehrfachsteckergehäuses 43 ausgebildet ist.

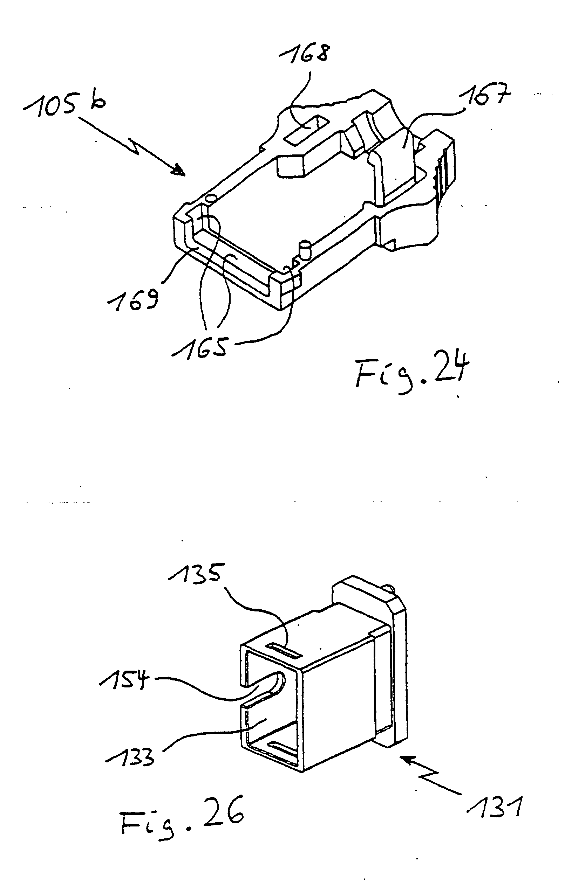

In Figur 23 ist in Form einer Explosionszeichnung ein andere Ausführungsform 101 eines erfindungsgemäßen Doppelsteckers dargestellt, welcher als wesentliche Teile aus einem Steckergehäuse 102, einem Kerngehäuse 103, einem Kerninnengehäuse 104 sowie einem zweiteiligen Aufnahmegehäuse 105a, 105b besteht, in welches mit Hilfe eines Crimpanchlusses 106a, einer Crimphülse 106b und eines Knickschutzes 106c ein Lichtleiterbündel 106d eingeführt ist und welches auf das Kerninnengehäuse 104 folgt. Das Kerngehäuse 103 ist als Gehäusequader ausgeführt mit zwei sich gegenüberliegenden Breitseiten 126 und dazwischen angeordneten Schmalseiten 142 mit Federschlitzen 142a sowie einer nach vorn weisenden Stirnfläche 157, in der zwei übereinander angeordnete Durchgangslöcher 115, 115' angeordnet sind.

Das Kerninnengehäuse 104 umfaßt eine vordere Quaderplatte 117a, welche auf ihrer vorderen Breitseite 123 einen Doppelzylinder 116 in Richtung der Längsachse des Steckers 101 trägt, wobei der Doppelzylinder 116 zwei Durchgangslöcher 118, 118' besitzt. Das Kerninnengehäuse 104 umfaßt ferner eine hintere Quaderplatte 117b. Diese ist parallel zur vorderen Quaderplatte 117a angeordnet und befindet sich in einem Abstand zu der hinteren Breitseite der vorderen Quaderplatte 117a und mit derselben durch einen ebenfalls quaderförmigen Verbindungssteg 117c verbunden, dessen Längsausdehnung dem Abstand zwischen der hinteren Breitseite der vorderen Quaderplatte 117a und der Vorderseite der hinteren Quaderplatte 117b entspricht und dessen seitliche bzw. vertikale Ausdehnung jeweils geringer ist als seitliche bzw. vertikale Ausdehnung der vorderen und der hinteren Quaderplatte 117a, 117b.

Kerngehäuse 103 und Kerninnengehäuse 104 bilden eine sogenannte Doppeleinheit 103-104 zur Aufnahme von zwei Ferrulen 9, 10, welche innerhalb dieser Doppeleinheit mittels Druckfedern 12 federbelastet gehaltert sind.

Das Kerngehäuse 103 wie auch das Kerninnengehäuse 104 sind zur Aufnahme der beiden Ferrule 9, 10 ausgestaltet, wobei die Ferrule im Kerngehäuse 103 gehaltert sind und die vorderen Enden der Ferrule 9, 10 die Stirnfläche 157 des Kerngehäuses 103 nach vorn durchragen. Die hinteren Enden der Ferrule 9, 10 ragen in das Kerninnengehäuse 104. Kerngehäuse 103 und Kerninnengehäuse 104 sind relativ wenigstens teilweise ineinandergesteckt und bilden dadurch die Doppeleinheit 103-104. Mit dem Zusammenfügen von Kerngehäuse 103 und Kerninnengehäuse 104 steht das Kerngehäuse 103 auf der vorderen Breitseite 123 der vorderen Quaderplatte 117a des Kerninnengehäuses 104 auf. Seitlich an dem Doppelzylinder 116 sind einander gegenüberliegend Rastnasen 160 angeordnet, welche welche beim Aufschieben des Kerngehäuses 103 auf den Doppelzylinder 116 in entsprechende Rastfenster 127 des Kerngehäuses 103 einzurasten imstande sind.

Die Ferrule 9, 10 weisen Drehsicherungen 11 auf und sind von hinten in das Kerngehäuse 103 eingesetzt und in entsprechend geformten Sitzen innerhalb des Kerngehäuses 103 nebeneinander angeordnet und in axialer Richtung beweglich gehaltert, wobei je eine Druckfeder 12 von hinten auf die Ferrule 9, 10 aufgeschoben ist und mit ihrem vorderen Ende an der Drehsicherung 11 angreift. Das hintere Ende der Druckfeder 12 stützt sich gegen einen inneren Absatz des Kerninnengehäuses 104 ab. Auf diese Weise können sich die Ferrule 9, 10 entgegen der Federkraft der Federn 12 etwas in axialer Richtung bewegen. Die hinteren Enden der Ferrule 9, 10 sind durch entsprechende Durchgangslöcher innerhalb der vorderen Quaderplatte 117a geführt. Das Lichtleiterbündel 6a weist mindestens zwei Lichtleiterfasern 7, 8 auf, wobei die Lichtleiterfasern 7, 8 durch die Ferrule 9, 10 an die Spitze derselben geführt sind.

Das Aufnahmegehäuse 105a, 105b umfaßt zwei Teile; nämlich eine linke Halbschale 105a und eine rechte Halbschale 105b, welche mittels Rastnasen 166, 167 und Rastfenstern 168 in einander gegenüberliegender miteinander verrastbar sind, wobei zwischen den Halbschalen 105a, 105b ein Hohlraum vorhanden ist.

Form und Position der Rastnasen 166, 167 und der Rastlöcher 168 sind vorteilhafterweise so gewählt, daß beide Halbschalen 105a, 105b keine Unterschiede aufzuweisen brauchen, sondern identisch ausgeführt sein können und dennoch miteinander verrastbar sind. Beide Halbschalen 105a, 105b sind so geformt, daß der hintere Bereich des Hohlraumes des Aufnahmegehäuses 105a, 105b bei miteinander verrasteten Halbschalen 105a, 105b einen zur Einführung eines Lichtleiterbündels 6a dienenden Crimpanschluß 106a mit Crimphülse 106b und Knickschutz 106c aufzunehmen und formschlüssig zu verankern imstande ist.

An seiner Vorderseite weist das Aufnahmegehäuse 105a, 105b bei miteinander verrasteten Halbschalen 105a, 105b ein offenes Frontfenster 169 auf. Die Hauptflächen der beiden Halbschalen 105a, 105b sowie deren obere und untere Begrenzungsflächen weisen an ihren Innenseiten im Bereich des Frontfensters jeweils eine Vertiefung 165 auf (Fig. 24), wobei diese Vertiefungen 165 bei miteinander verrasteten Halbschalen 105a, 105b in der Innenwandung des Aufnahmegehäuses 105a, 105b eine senkrecht zur Längsrichtung des Doppelsteckers 101 vollständig umlaufende Rinne bilden. Die Rinne ist so geformt, daß sie zur formschlüssigen Aufnahme der hinteren Quaderplatte 117b imstande ist. Das Kerninnengehäuse 104 ist somit in dem Aufnahmegehäuse 105a, 105b formschlüssig verankerbar, indem bei voneinander getrennten Halbschalen 105a, 105b die hintere Quaderplatte 117b zunächst ein die Vertiefungen 165 einer der Halbschalen 105a, 105b eingelegt und anschließen letztere mit der anderen Halbschale verrastet wird.

Die Doppeleinheit 103-104 zusammen mit dem Aufnahmegehäuse 105a, 105b werden in ein Steckergehäuse 102 eingeführt, welches im Wesentlichen als Gehäusequader ausgeführt ist mit zwei sich gegenüberliegenden großen Gehäuseflächen und zwei dazwischen angeordneten Schmalseiten; das Steckergehäuse 102 ist an seinen beiden Stirnseiten offen. Seine beiden Schmalseite weisen im Bereich der vorderen Enden Aussparungen 184 auf. Das Kerngehäuse 103, das Kerninnengehäuse 104 und das Aufnahmegehäuse 105a, 105b sind im Steckergehäuse 102 schwimmend gehaltert.

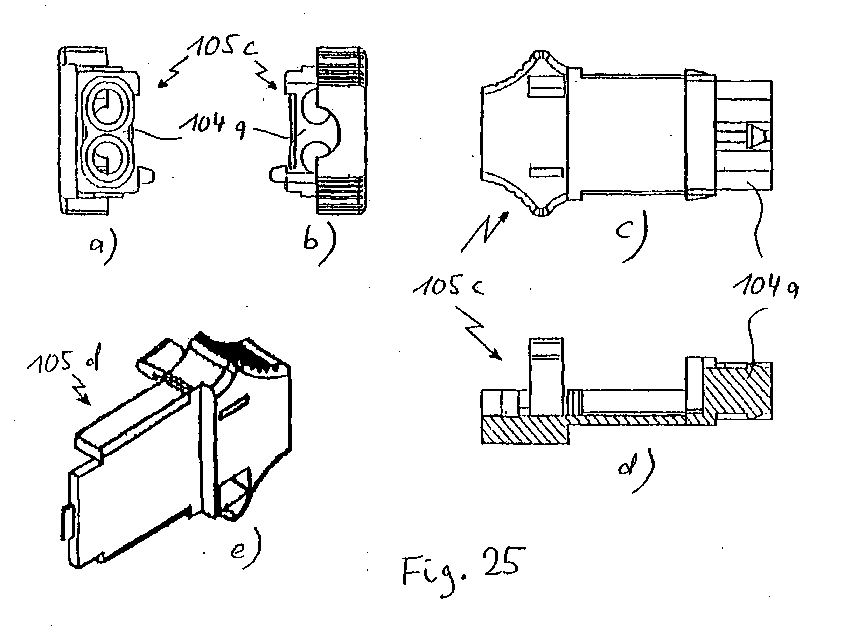

Fig. 25 zeigt eine andere Ausführungsfom eines zweiteiligen Aufnahmegehäuses 105c, 105d, welches bereits von vornherein ein Kerninnengehäuse 104a umfaßt und anstelle des Aufnahmegehäuses 105a, 105b und des Kerninnengehäuses 104 von Fig. 23 verwendbar ist. Das Aufnahmegehäuse 105c, 105d umfaßt zwei Halbschalen 105c, 105d, wobei die eine Halbschale 105c fest mit dem Kerninnengehäuse 104a verbunden ist; die Halbschale 105c und das Kerninnengehäuse 104a sind dabei bevorzugterweise ein einziges monolithisches Formteil und können daher vorteilhafterweise in einem einzigen Produktionsvorgang, z.B. Spritzen oder Pressen, hergestellt werden. Fig. 25a zeigt eine Frontansicht der Halbschale 105c mit dem Kerninnengehäuse 104a aus Richtung der Kupplung, Fig. 25b die entsprechende Ansicht aus der entgegengestzten Richtung. Fig. 25c eine Draufsicht auf die Außenseite der Halbschale 105c und Fig. 25d eine Seitenansicht derselben, wobei jeweils von links das nicht gezeigte Lichtleiterbündel 6a einzuführen ist und das Kerninnengehäuse 104a die Halbschale 105c nach rechts in Richtung der Kupplung überragt. Fig. 25e zeigt die zugehörige andere Halbschale 105d in perspektivischer Darstellung.

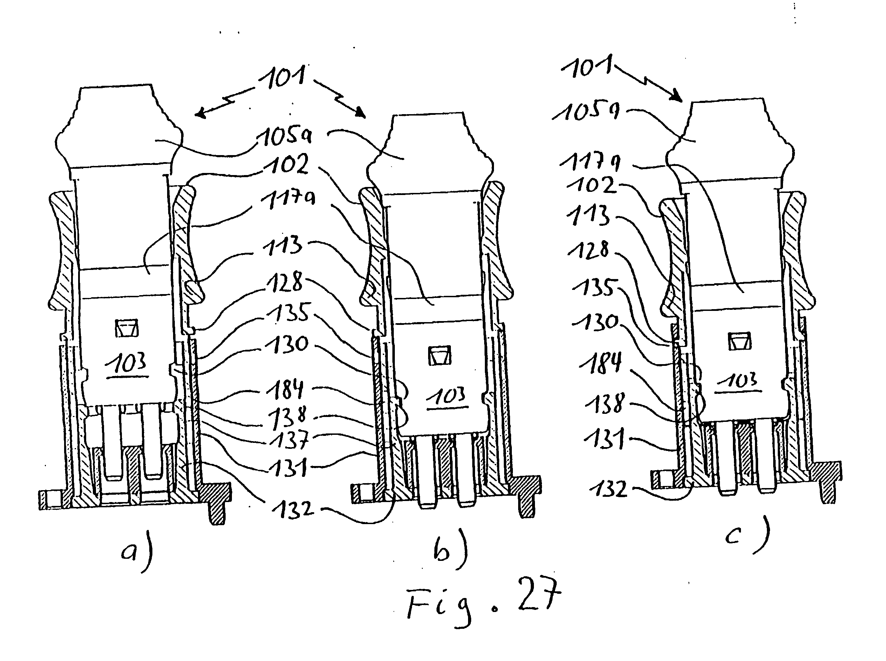

Beim Einstecken des Steckers 1 in eine Kupplung verrastet das Kerngehäuse 103 mit seinem vorderen Ende aufgrund einer gegenseitigen Verrastung innerhalb der Kupplung. Eine einzelne Kupplung besteht aus einem Außenkupplungsgehäuse 131 (Fig. 26), in welches ein Innenkupplungsgehäuse 132 eingesetzt ist. Beide Teile, nämlich Außenkupplungsgehäuse 131 wie Innenkupplungsgehäuse 132 sind vorzugsweise doppelt vorhanden, wenn mittels zweier identischer Stecker 101 eine Fortführung einer Lichtwellenleiterverbindung geschaffen werden soll. In das Aufnahmevolumen 133 des Außenkupplungsgehäuses 131 kann das Steckergehäuse 102 eingeschoben werden, wozu die Innenkontur des Aufnahmevolumens 133 des Außenkupplungsgehäuses 131 und die Außenkontur des Steckergehäuses 102 entsprechend geformt sind. Das Außenkupplungsgehäuse 131 weist ferner eine Führungsnut 154 zur Aufnahme des Längssteges 153 und damit zur Führung des Steckergehäuses 102 (Fig. 23) auf.

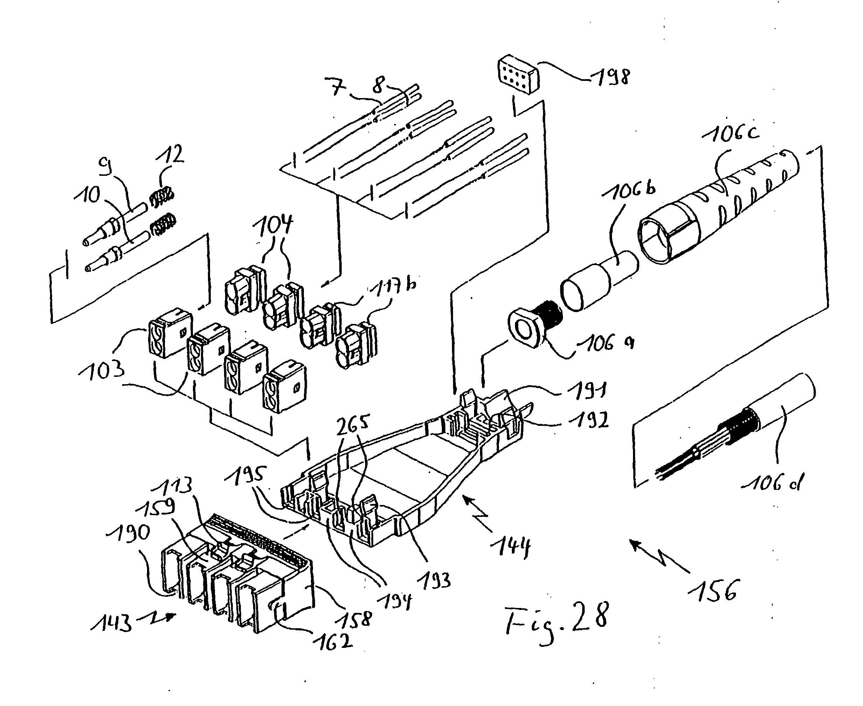

Die Fig. 27a,b,c zeigen schematisch den Vorgang des Ankuppelns eines erfindungsgemäßen Doppelsteckers 101 in ein Außenkupplungsgehäuse 131. Der Doppelstecker 101 umfaßt das Aufnahmegehäuse 105a, 105b, wobei in Fig. 27 nur die Halbschale 105a sichtbar, die andere Halbschale 105b hingegen verdeckt ist, sowie ein Kerninnengehäuse 104, ein Kerngehäuse 103 und ein im Querschnitt dargestelltes Steckergehäuse 102. Das Aufnahmegehäuse 105a, 105b, das Kerninnengehäuse 104 und das Kerngehäuse 103 sind in Fig. 27 zusammengefügt wie unter Bezug auf Fig. 24 erläutert wurde, so daß lediglich die vordere Quaderplatte 117a des Kerninnengehäuses sichtbar ist, da der Rest desselben im Aufnahmegehäuse 105a, 105b bzw. im Kerngehäuse 103 aufgenommen ist. Das Steckergehäuse 102 ist über die Doppeleinheit 103-104 geschoben. In Fig. 26a ist der Doppelstecker 101 erst teilweise in das Außenkupplungsgehäuse 131 eingeschoben. Eine Verrastung des Doppelsteckers mit der Kupplung ist noch nicht gegeben.

In Fig. 27b ist die aus der Doppeleinheit 103-104 und dem Aufnahmegehäuse bestehende Baugruppe vollständig in die Kupplung eingeführt. Das Kerngehäuse 103 ist mittels der Quernuten 130 und der an Armen 137 angeordneten Rastnasen 138 mit dem Innenkupplungsgehäuse 132 verrastet. Diese Verrastung kann jedoch durch Zug am hinteren Aufnahmegehäuse oder am Lichtleiterbündel 6a (in Fig. 27 nicht gezeigt) mit geringer Kraft wieder gelöst werden, da die Rastnasen 138 unter Biegung der Arme 137 sehr leicht seitlich nach außen in die Aussparungen 184 und damit aus den Quernuten 130 heraus ausgelenkt werden können.

Nun wird das Steckergehäuse 102 in Richtung der Kupplung geschoben, bis es seinerseits mittels Rastnasen 128 und Rastfenstern 135 mit dem Außenkupplungsgehäuse 131 verrastet (Fig. 27c). Die Aussparungen 184 sind gegenüber Fig. 27b in Richtung der Kupplung verschoben und befinden sich nicht mehr im Bereich der Rastnasen 138. Die Verrastung zwischen Kerngehäuse 103 und Innenkupplungsgehäuse 132 kann nun nicht mehr durch Zug am Aufnahmegehäuse 105a, 105b oder am Lichtleiterbündel 6a (in Fig. 27 nicht gezeigt) gelöst werden, da die Rastnasen 138 nicht mehr seitlich aus den Quernuten 130 heraus ausgelenkt werden können. Die Verrastung zwischen Kerngehäuse 103 und Innenkupplungsgehäuse 132 ist in der in Fig. 27c gezeigten Stellung des Steckergehäuses 102 nicht lösbar und fungiert somit als Abzugssicherung. Stecker und Kupplung sind fest miteinander verriegelt.

Eine Deaktivierung der Abzugssicherung und damit eine Entriegelung sind nur möglich, indem das Steckergehäuse 102 in Richtung des Lichtleiterbündels 6a zurückverschoben wird, also in die in Fig. 27b gezeigte Stellung. Hierzu wird zunächst Druck auf die Laschen 113 ausgeübt, wodurch die Rastnasen 128 aus den Rastfenstern 135 ausgelenkt werden, und anschließend das Steckergehäuse 102 in Richtung des Lichtleiterbündels 6a bewegt. Nun kann der Stecker 101 unter seitlicher Auslenkung der Rastnasen 138 wieder mit geringem Kraftaufwand von der Kupplung gelöst werden.

In Figur 28 ist in Form einer Explosionszeichnung ein andere Ausführungsform 101 eines erfindungsgemäßen Mehrfach-Doppelsteckers 156 dargestellt. Im Wesentlichen setzt sich der Mehrfach-Doppelstecker 156 aus einem Steckergehäuse 143, aus einer oberen und einer unteren Gehäuseschale und einer Mehrzahl von untereinander gleich ausgeführten Doppeleinheiten 103-104 zusammen, wobei die Doppeleinheiten 103-104 in einem Aufnahmegehäuse, umfassend die untere Gehäuseschale 144 und die (nicht gezeigte) obere Gehäuseschale, nebeneinander angeordnet sind. In das Aufnahmevolumen ist mit Hilfe eines Crimpanchlusses 106a, einer Crimphülse 106b und eines Knickschutzes 106c ein Lichtleiterbündel 106d eingeführt.

Vorzugsweise sind zum Aufbau des Mehrfach-Doppelsteckers von Fig. 28 die Doppelstecker von Fig. 24 n-mal vorhanden. Allerdings sind ebenso Ausführungen möglich und für Sonderanwendungen sinnvoll, in denen beispielsweise drei Einzelferrule in einem Dreier-Kerngehäuse sowie einem Dreier-Kerninnengehäuse angeordnet sind, wobei die Ferrule nebeneinander oder übereinander angeordnet sein können.

Bei dem in Fig. 28 beispielhaft gezeigten Mehrfach-Doppelstecker 156 besteht das Aufnahmegehäuse aus zwei übereinander angeordneten Gehäuseschalen, von denen nur die untere dargestellt ist und zwischen denen die Doppeleinheiten 103-104, wie sie für die Ausführung des Doppelsteckers 101 beschrieben sind, nebeneinander aufgereiht sind. Die Kerninnengehäuse 104 können mittels einer Verrastung miteinander verrasten. Die Kerngehäuse 103 weisen Quernuten 130 auf, deren Funktion bereits unter Bezug auf Fig. 27 erläutert wurde. Die Doppeleinheiten 103-104 sind in ein Mehrfachsteckergehäuse 143 gesteckt und darin schwimmend gehaltert, wobei das Mehrfachsteckergehäuse 143 eine Mehrzahl von aneinandergereihten und miteinander verbundenen Doppelsteckergehäusen 158, 159 umfassen kann. Die innen liegenden Doppelsteckergehäuse 159 sind untereinander identisch ausgeführt, die jeweiligen randseitigen Doppelsteckergehäuse 158 sind zueinander symmterisch ausgeführt. Die inneren Doppelsteckergehäuse 159 weisen Laschen 113 und Rastnasen 128 auf, deren Funktion derjenigen der Laschen 113 und der Rastnasen 128 entspricht, welche bereits unter Bezug auf Fig. 27 erläutert wurde.

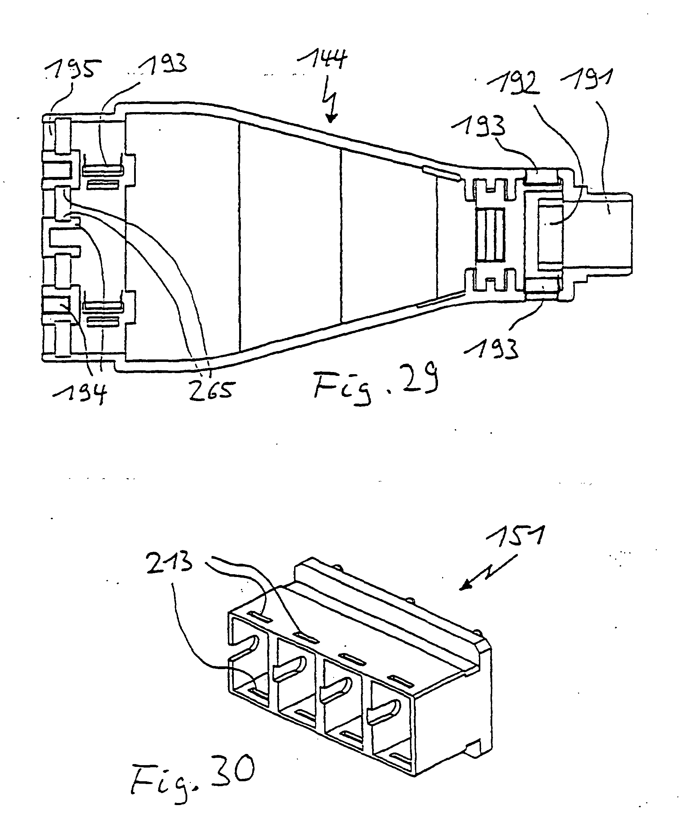

Fig. 29 zeigt die untere Halbschale 144 von Fig. 28 in senkrechter Draufsicht. Die im Beispiel von Fig. 28 und Fig. 29 für insgesamt acht Ferrulen ausgelegte untere Halbschale 144 eines erfindungsgemäßen Mehrfach-Doppelsteckers weist eine halbzylindrische Aufnahme für den Knickschutz 106c und ein je Bett 192 für die Aufnahme des Crimpanschlusses 106a und eines Faseraufteilers 198 auf, welche im Regelfall im Endbereich des Lichtleiterbündels 106d zur drehsicheren Verankerung desselben angeordnet ist.

Rastnasen 193 welche sich von der Hauptfläche der Halbschale 144 nach oben erstrecken, dienen zur Verrastung der unteren Halbschale 144 mit der nicht gezeigten oberen Halbschale, wobei Form und Position der Rastnasen 193 vorteilhafterweise so gewählt sind, daß die untere und die obere Halbschale keine Unterschiede aufzuweisen brauchen, sondern identisch ausgeführt sein können und dennoch miteinander verrastbar sind. Der vordere Endbereich der Halbschalen ist jeweils so geformt, daß das zwischen den Halbschalen befindliche Aufnahmevolumen ein Mehrfachsteckergehäuse 158 aufzunehmen imstande ist, wobei durch Führungsstege 194 vier voneinander getrennte Aufnahmenuten 195 zur Aufnahme je einer Doppeleinheit 103-104 dienen.

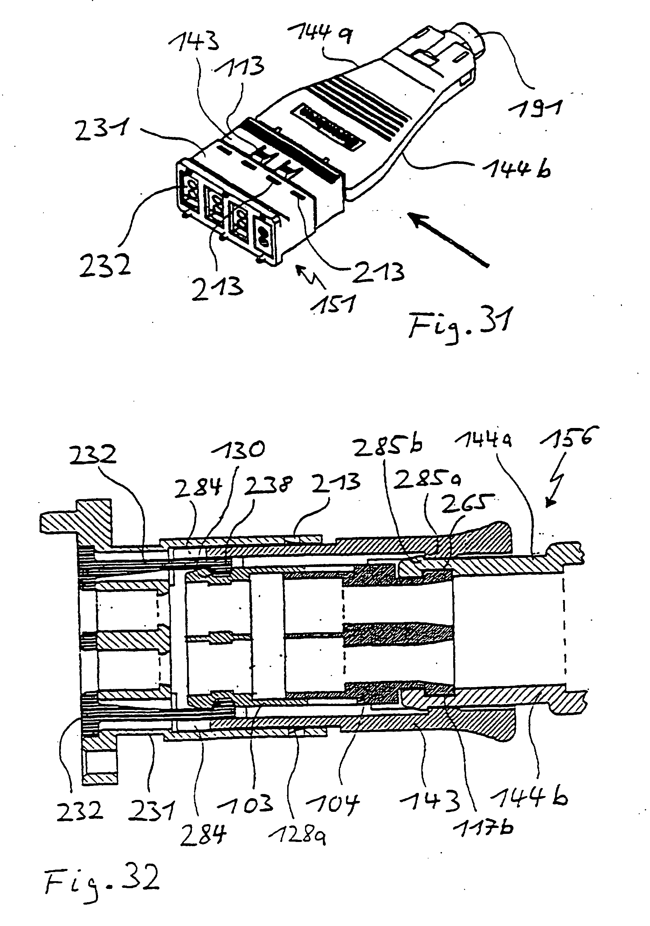

Die Fig. 31 und 32 zeigen den Mehrfachstecker 156 von Fig. 28, welcher mit der Mehrfach-Kupplung 151 von Fig. 30 verbunden ist. Fig. 31 ist eine perspektivische Darstellung des Systems Mehrfachstecker-Mehrfachkupplung, während Fig. 32 eine gegenüber Fig. 31 vergrößerte Querschnittsdarstellung ist, wobei die Blickrichtung der Richtung des Pfeils von Fig. 31 entspricht und in Fig. 32 nur der vordere Teil des Mehrfachsteckers 156 dargestellt ist.

Die Mehrfach-Kupplung 151 umfaßt ein Mehrfachkupplungs-Außengehäuse 231 und ein Mehrfachkupplungs-Innengehäuse 232. Der Mehrfachstecker 156 umfaßt zwei Halbschalen 144a, 144b, welche mit der Halbschale 144 von Fig. 28 jeweils identisch sind, sowie vier Doppeleinheiten 103-104 und ein Mehrfach-Steckergehäuse 143. In Fig. 31 sind die Doppeleinheiten vom den Halbschalen 144a, 144b und dem Mehrfach-Steckergehäuse 143 verdeckt und daher nicht sichtbar. In Fig. 32 liegen die Doppeleinheiten 103-104 in einer Richtung senkrecht zur Papierebene hintereinander.

Die Halbschalen 144a, 144b, das Kerninnengehäuse 104 und das Kerngehäuse 103 sind in Fig. 31 und Fig. 32 zusammengefügt wie unter Bezug auf Fig. 28 erläutert wurde. Die hintere Quaderplatte 117b jedes Kerninnengehäuses 104 ist entlang ihrer vier Schmalseiten in entsprechenden Vertiefungen 265 der Halbschalen 144a, 144b aufgenommen, so daß die Kerninnengehäuse 104 formschlüssig durch die Schalschalen 144a, 144b gehaltert sind. Das Mehrfach-Steckergehäuse 143 ist teilweise in das Mehrfachkupplungs-Außengehäuse 231 eingeschoben, wobei sich der der Kupplung zugewandte Endbereich des Mehrfach-Steckergehäuses 143 zwischen dem Mehrfachkupplungs-Außengehäuse 231 und dem dem Stecker 156 zugewandten Endbereich des Mehrfachkupplungs-Innengehäuse 232 befindet.

Die Bewegung des Mehrfach-Steckergehäuses ist gegenüber den Halbschalen 144a, 144b durch Anschläge 285a, 285b und gegenüber dem Mehrfachkupplungs-Außengehäuse 231 durch Rastfenster 213 und Rastnasen 128a von keilförmigem Querschnitt begrenzt.

Das Mehrfachkupplungs-Innengehäuse 232 weist Rastnasen 238 auf, wobei jeweils eine Rastnase 238 in eine Quernut 130 der Kerngehäuse 103 eingreift. Das Kerngehäuse 103 ist daher mittels der Quernuten 130 und der Rastnasen 238 mit der Kupplung verrastet. Die Verrastung zwischen Kerngehäuse 103 und Mehrfachkupplungs-Innengehäuse 232 kann nicht durch Zug am Stecker 156 oder am Lichtleiterbündel (in Fig. 32 nicht gezeigt) gelöst werden, da die Rastnasen 238 durch den kupplungsseitigen Endbereich der Wandung des Mehrfach-Steckergehäuses 143 daran gehindert werden, seitlich aus den Quernuten 130 heraus ausgelenkt werden zu können. Die Verrastung zwischen Kerngehäuse 103 und Mehrfachkupplungs-Innengehäuse 232 ist in der in Fig. 32 gezeigten Stellung des Mehrfach-Steckergehäuses 143 nicht lösbar und fungiert somit als Abzugssicherung. Stecker und Kupplung sind fest miteinander verriegelt. Ein z.B. ungewolltes Abziehen des Steckers von der Kupplung ist nicht möglich.

Eine Deaktivierung der Abzugssicherung und damit eine Entriegelung sind nur möglich, indem das Mehrfach-Steckergehäuse 143 in Richtung des Lichtleiterbündels 6a so weit zurückverschoben wird, daß sich die Aussparungen 284 im Bereich der Rastnasen 238 befinden. Hierzu wird das Mehrfach- Steckergehäuse 143 gegenüber der Kupplung und gegenüber den Halbschalen 144a, 144b in Richtung des Lichtleiterbündels 6a bewegt, so daß die Rastnasen 113 aus den Rastfenstern 213 gleiten und die Aussparungen 284 in den Bereich der Rastnasen 238 wandern. Nun kann der Mehrfach-Stecker 156 unter seitlicher Auslenkung der Rastnasen 238 mit geringem Kraftaufwand von der Kupplung gelöst werden.

Selbstverständlich sind auch Abwandlungen möglich, welche eine andere Zahl von Doppeleinheiten 103-104 als vier aufzunehmen imstande sind.

Nur der erfindungsgemäße Aufbau ermöglicht eine Miniaturierung des Steckers zum Zwecke der Übertragung optischer Information. Gemäß einer bevorzugten Ausführungsform weist das Außenkupplungsgehäuse in Richtung quer zur Längsachse des Steckers eine Höhe von ca. 12 m m und eine Breite von ca. 6 mm und in Richtung der Längsachse des Steckers (1,56,101,156) eine Ausdehnung von 11 mm und das Kerngehäuse in Richtung quer zur Längsachse des Steckers eine Höhe von ca. 6 mm und eine Breite von ca. 3,5 mm auf.

Mit dem Gegenstand der Erfindung können nunmehr in vorteilhafter Weise insbesondere Bündeladern von Lichtleitern, also individuelle Fasern, wie auch Bändchen verarbeitet werden. Insbesondere weist der Gegenstand der Erfindung eine vierfache, oder sogar mehr, Dichte von Steckern gegenüber vergleichbaren Steckern des Standes der Technik auf. Der erfindungsgemäße Stecker kann sowohl für Verbindungskabel, Jumperkabel oder Trunkkabel, wie auch zur Zuführung in Boxen von Verteilerschränken eingesetzt werden. Zum Beispiel können nunmehr in einer Box statt 8 Fasern 32 kontaktiert werden. Auch kann zur besseren Verriegelung und gegen ein ungewolltes Abziehen des erfindungsgemäßen Steckers eine zusätzliche Verriegelungshülse (lock hood) vorgesehen sein.

### Gewerbliche Anwendbarkeit:

Die Erfindung ist insbesondere zum Aufbau von Steckern in der Lichtleitfaser-Technik gewerblich anwendbar, wobei der erfindungsgemäße Stecker Teil eines Stecker-Kupplung-Systems ist und beim Einstecken des Steckers in die Kupplung das Kerngehäuse mit seinem vorderen Ende aufgrund einer gegenseitiger Verrastung in der Kupplung verrastet. Die besondere Nützlichkeit der Erfindung liegt darin, dass durch dieselbe in vorteilhafter Weise der Aufbau eines Doppelsteckers oder eines Mehrfach-Doppelsteckers ermöglicht wird, bei welchen die entscheidenden Vorteile des Einzelferruls erhalten bleiben und insbesondere die Möglichkeit der apc-Kontaktierung zweier sich in einer Kupplung gegenüberliegende Ferrule gegeben ist. Eine weitere Nützlichkeit der Erfindung besteht darin, dass der Stecker eine hohe Packungsdichte ermöglicht, was aufgrund der erfindungsgemäßen Doppeleinheiten möglich ist. Ebenso weist der Stecker eine zuverlässige Abzugssicherung auf, so dass er nicht versehentlich durch Zug am Lichtleitkabel abgezogen werden kann.

### Liste der Bezugszeichen:

- 1, 101: Doppelstecker
- 2,102: Steckergehäuse
- 3,103: Kerngehäuse
- 4,104: Kerninnengehäuse
- 5, 105a, b: hinteres Aufnahmegehäuse
- 6, 6a: Lichtleiterbündel
- 7,8: Lichtleiterfasern
- 9, 10: Keramikferrule
- 11: Drehsicherung
- 12: Druckfeder
- 13,113: Lasche
- 14: Aufnahmevolumen von 2
- 15, 15', 115, 115': Durchgangslöcher
- 18, 18', 118, 118': Durchgangslöcher
- 16,116: Doppelzylinder
- 17, 117a, 117b: Quaderplatte, vordere, hintere Quaderplatte
- 19, 19', 45: Führungszungen
- 20: Aufnahmevolumen von 5
- 21, 28, 38, 46: Rastnasen
- 22, 27, 35, 35': Rastfenster
- 23,123: vordere Breitseite von 17, 117a
- 34,42,63,142: Schmalseiten
- 24: Führungsnut
- 25: Steg
- 26,126: Breitseite
- 29: Griffmulde
- 30,130: Quernut
- 31, 31', 131: Außenkupplungsgehäuse
- 32, 32', 132: Innenkupplungsgehäuse
- 33,131: Aufnahmevolumen von 31, 131
- 36: Platte
- 37,37',137: Arme
- 39: Aufnahmeteil
- 40: Durchgangsloch
- 41: Führungshülse
- 43: Mehrfachsteckergehäuse
- 44, 144: Gehäuseschale
- 47: Aufnahmenuten
- 48,49: Rastfenster
- 50: Hauptseite
- 51: Außenkupplungsgehäuse
- 52: Aufnahmeteile
- 53, 62, 153: Längssteg
- 54, 55,64,154: Führungsnut
- 56,156: Mehrfach-Doppelstecker
- 57,157: Stirnfläche von 3, 103
- 58, 59: Doppelsteckergehäuse
- 60: Rastnase
- 106a: Crimpanschluß
- 106b: Crimphülse
- 106c: Knickschutz
- 106d: Lichtleiterbündel
- 113: Lasche
- 117c: Verbindungssteg
- 128a: Rastnase
- 130: Quernut
- 135: Rastfenster
- 138: Rastnase
- 143: Steckergehäuse
- 144, 144a, 144b: Halbschalen
- 151: Mehrfach-Kupplung
- 156: Mehrfach-Stecker
- 158,159: Doppelsteckergehäuse
- 165: Vertiefungen
- 168: Rastfenster
- 169: Frontfenster
- 184,190: Aussparung
- 191: Aufnahme
- 192: Bett
- 194: Führungsstege
- 195: Aufnahmenuten
- 198: Faseraufteiler
- 213: Rastfenster
- 231: Mehrfachkupplungs-Außengehäuse
- 232: Mehrfachkupplungs-Innengehäuse
- 265: Vertiefungen
- 284: Aussparungen
- 285a, b: Anschläge

## Patentansprüche

1. Stecker (1,56,101,156) für Lichtwellenleiter (6,6a,7,8,106d), mit einem Steckergehäuse (2,43,102,143), an dessen hinteren Ende ein Lichtleiterbündel (6,6a,7,8,106d) mit mindestens zwei Lichtwellenleiterfasern (7,8) eingeführt ist und an dessen gegenüberliegendem vorderen Ende Ferrule (9,10) austreten, in die je eine der Lichtwellenleiterfasern (7,8) eingeführt ist, wobei die Ferrule (9,10) in einem Ferrulegehäuse (3,4, 103,104) gehaltert sind, welches in das zur Aufnahme des Ferrulegehäuses (3,4, 103,104) entsprechend geformte Steckergehäuse (2,43,102,143) eingelegt ist und die Ferrule (9,10) federbelastet in ihrer Axialrichtung beweglich sind, wobei das Ferrulegehäuse aus einem Kerngehäuse (3,103) und einem Kerninnengehäuse (4,104) besteht, welche zur Aufnahme von zwei einzelnen Ferrulen (9,10) ausgestaltet sind, wobei die Ferrule (9,10) im Kerngehäuse (3,103) gehaltert sind und die vorderen Enden der Ferrule (9,10) das Kerngehäuse (3,103) nach vorn durchragen und die hinteren Enden der Ferrule (9,10) in das Kerninnengehäuse (4,104) ragen, wobei Kerngehäuse (3,103) und Kerninnengehäuse (4,104) wenigstens teilweise ineinander gesteckt sind, und der Stecker (1,56,101,156) zum Zusammenstecken mit einem den Stecker (1,56,101,156) aufnehmenden Kupplungsgehäuse (31,31',131,32,32', 132) bestimmt ist, **dadurch gekennzeichnet,**
**dass** das Kerninnengehäuse (4) eine mit Durchgangslöchern (18,18') versehene Quaderplatte (17) umfaßt, auf deren Vorderseite (23) ein in axialer Richtung des Steckers (1,56) sich erstreckender Doppelzylinder (16) mit den Durchgangslöchern (18,18') aufgesetzt ist und an deren Rückseite zwei Führungszungen (19,19') in axialer Richtung sich erstrecken zum Einführen in das hintere Aufnahmegehäuse (5), wobei Führungszungen (19,19') und Aufnahmegehäuse (5) gegenseitige Verrastungsmittel (21,22) aufweisen.

2. Stecker nach Anspruch 1, **dadurch gekennzeichnet,**
**dass** die Verrastungsmittel (21,22) Rastnasen (21) und Rastfenster (22) sind, wobei die Rastnasen (21) an den Führungszungen (19,19') angeordnet sind und das Aufnahmegehäuse (5) die Form eines Gehäusequaders (5) mit je ein Rastfenster (22) aufweisenden Seitenwandungen (23) besitzt, in welche die Rastnasen nach Einführen der Führungszungen (19,19') in das Aufnahmegehäuse (5) einzurasten imstande sind.

3. Stecker nach Anspruch 1 oder 2, **dadurch gekennzeichnet,**
**dass** das Aufnahmegehäuse aus zwei übereinander angeordneten Gehäuseschalen (44,144,144a,144b) besteht, zwischen denen zum Aufbau eines Mehrfach-Doppelsteckers (56,156) Doppeleinheiten (3-4) aus Kerngehäuse (3,103) und Kerninnengehäuse (4,104) in identischer Weise mehrfach vorhanden und nebeneinander aufgereiht sind, wobei die Kerninnengehäuse (4) in den Gehäuseschalen (44) mittels einer Verrastung (21,48,49) miteinander verrastet sind und die Doppeleinheiten (3-4) in ein Mehrfachsteckergehäuse (43) gesteckt und darin schwimmend gehaltert sind, welches aus einer Mehrzahl von aneinandergereihten und miteinander verbundenen Doppelsteckergehäusen (58,59) besteht.

4. Stecker nach Anspruch 3, **dadurch gekennzeichnet,**
**dass** die mindestens ein Teil der Doppelsteckergehäuse (58,59) des Mehrfachsteckergehäuses (43) Laschen (13) zum Lösen der Verriegelung mit dem Aufnahmegehäuse (44) aufweist.

5. Stecker nach Anspruch 1, **dadurch gekennzeichnet, dass**
die Quaderplatte von einer vorderen Quaderplatte (117a) und einer hinteren Quaderplatte (117b) geformt ist, wobei
- das Kerninnengehäuse (104) die mit Durchgangslöchern (118,118') versehene vordere Quaderplatte (117a) und statt der beiden Führungszungen die von der vorderen Quaderplatte (117a) in Richtung des Lichtwellenleiters (106a) parallel beabstandete, mit der vorderen Quaderplatte (117a) durch einen Verbindungssteg (117c) verbundene hintere Quaderplatte (117b) umfaßt, und die seitliche bzw. vertikale Ausdehnung des Verbindungssteges (117c) geringer ist als seitliche bzw. vertikale Ausdehnung der hinteren Quaderplatte (117b),
- und das Aufnahmegehäuse (105a,105b,144,144a,144b) aus zwei miteinander verrastbaren Halbschalen (105a,105b,144,144a,144b) besteht, wobei die Hauptflächen der beiden Halbschalen (105a,105b,144,144a,144b) an ihren Innenseiten im Bereich des vorderen Endes des Aufnahmegehäuses (105a, 105b,144,144a,144b) jeweils eine Vertiefung (165,265) aufweisen, welche bei miteinander verrasteten Halbschalen (105a,105b,144,144a,144b) zur formschlüssigen Aufnahme der hinteren Quaderplatte (117b) imstande sind.

6. Stecker nach Anspruch 3, **dadurch gekennzeichnet,**
**dass** das Aufnahmegehäuse (144,144a,144b) aus zwei übereinander angeordneten Gehäuseschalen (144,144a,144b) besteht, zwischen denen die Doppeleinheiten (103-104) nebeneinander aufgereiht sind, wobei die Doppeleinheiten (103-104) sowie die Aufnahmegehäuse (144,144a,144b) in ein Mehrfachsteckergehäuse (143) gesteckt und darin schwimmend gehaltert sind, welches eine Mehrzahl von aneinandergereihten und miteinander verbundenen Doppelsteckergehäusen (158,159) umfaßt.

7. Stecker nach einem der vorherigen Ansprüche,
**dadurch gekennzeichnet, daß** das Kerngehäuse (3,103) in Richtung quer zur Längsachse des Steckers (1,56,101,156) eine Höhe von ca. 6 mm und eine Breite von ca. 3,5 mm aufweist.

8. Stecker-Kupplung-System mit einem Stecker nach einem der Ansprüche 1 bis 11, **dadurch gekennzeichnet,**
**dass** bei gegenseitiger Verrastung von Kerngehäuse (3,103) und Kupplung (31,31',32,32',51,131,132,151) das Steckergehäuse (2,43,102,143) in Längsrichtung des Steckers (1,56,101,156) gegenüber dem Kerngehäuse (3,103) und der Kupplung (31,31',32,32',51,131,132,151) zum Zweck der Aktivierung einer Abzugssicherung in eine erste Stellung und zum Zweck der Deaktivierung der Abzugssicherung in eine zweite Stellung verschiebbar ist, wobei
in der ersten Stellung ein Teil der Wandung des Steckergehäuses (2,43,102,143) im Bereich der Rastnasen (38,38',138) so angeordnet ist, daß keine Auslenkbarkeit der Rastnasen (38,38',138) der Arme (37,37',137) aus den Quernuten (30, 130) heraus besteht, so daß die mechanische Verbindung zwischen Stecker (1,56,101,156) und Kupplung (31,31',32,32',51,131,132,151) durch Zug am Lichtleiter (6,6a,106d) oder am Aufnahmegehäuse (5, 44, 105, 144, 144a,144b) nicht lösbar ist,
jedoch in der zweiten Stellung kein Teil der Wandung des Steckergehäuses (2,43,102,143) im Bereich der Rastnasen (38,38',138) angeordnet ist, so daß eine Auslenkbarkeit der Rastnasen (38,38',138) der Arme (37,37',137) aus den Quernuten (30,130) heraus gegeben ist und die mechanische Verbindung zwischen Stecker (1,56,101,156) und Kupplung (31,31', 32,32', 51, 131, 132, 151) durch Zug am Lichtleiter (6,6a,106d) oder am Aufnahmegehäuse (5, 44, 105a, 105b, 144, 144a,144b) lösbar ist.

9. Stecker-Kupplung-System nach Anspruch 8, **dadurch gekennzeichnet, daß** in der zweiten Stellung des Steckergehäuses (2,43,102,143) die Auslenkbarkeit der Rastnasen (38,38',138) aus den Quernuten (30,130) dadurch gegeben ist, daß die Arme (37,37',137) mit ihren von der Kupplung (31,31',32,32',51,131, 132,151) abgewandten Endbereichen in Aussparungen (84,184,284) der Wandung des Steckergehäuses (2,43,102,143) einzugreifen imstande sind.

10. Stecker-Kupplung-System nach Anspruch 8, **dadurch gekennzeichnet, daß** das Außenkupplungsgehäuse (31,31',131) in Richtung quer zur Längsachse des Steckers (1,56,101,156) eine Höhe von ca. 12 mm und eine Breite von ca. 6 mm und in Richtung der Längsachse des Steckers (1,56,101,156) eine Ausdehnung von 11 mm aufweist.

11. Stecker-Kupplung-System nach Anspruch 8, **dadurch gekennzeichnet, dass** beim Einstecken des Steckers (1,56,101,156) in eine Kupplung (31,31', 32,32', 51, 131, 132, 151) das Kerngehäuse (3,103) mit seinem vorderen Ende aufgrund einer gegenseitiger Verrastung (30,38, 130,138) in der Kupplung (31,31', 32,32', 51, 131, 132, 151) verrastet, wobei die gegenseitige Verrastung von Kerngehäuse (3,103) und Kupplung (31,31', 32,32', 51, 131, 132, 151) bezüglich des Kerngehäuses (3,103) eine Quernut (30,130) umfassen, welche in der Schmalseite (42,142) des Kerngehäuses (3,103) verläuft, wobei die Kupplung ein Außenkupplungsgehäuse (31,31',131) und ein Innenkupplungsgehäuse (32,32',132) umfaßt, welches eine im wesentlichen quaderförmigen Platte (36) aufweist, auf der sich zwei Arme (37,37',137) senkrecht erheben, an deren Enden Rastnasen (38,138) angeordnet sind, welche beim Einschieben des Kerngehäuses (3,103) zwischen die beiden Arme (37,37',137)' des Innenkupplungsgehäuses (32,32',132) in den Quernuten (30,130) verrasten.

## Claims

1. A connector (1, 56, 101, 156) for optical waveguides (6, 6a, 7, 8, 106d) with a connector housing (2, 43, 102, 143) at whose rear end an optical fiber bundle (6, 6a, 7, 8, 106d) that has at least two optical waveguide fibers (7, 8) is inserted and at whose opposite, front end, ferrules (9, 10) exit, into each of which one of the optical waveguide fibers (7, 8) is inserted, whereby the ferrules (9, 10) are secured in a ferrule housing (3, 4, 103, 104) that is placed into the connector housing (2, 43, 102, 143) that is shaped appropriately to receive the ferrule housing (3, 4, 103, 104) and the ferrules (9, 10) can be moved under spring load in their axial direction, whereby the ferrule housing consists of a core housing (3, 103) and of a core inner housing (4, 104) that are configured to receive two individual ferrules (9, 10), whereby the ferrules (9, 10) are secured in the core housing (3, 103) and the front ends of the ferrules (9, 10) project forward through the core housing (3, 103) and the rear ends of the ferrules (9, 10) project into the core inner housing (4, 104), whereby the core housing (3, 103) and the core inner housing (4, 104) are at least partially fit into each other, and the connector (1, 56, 101, 156) is intended to be fit into a coupling housing (31, 31', 131, 32, 32', 132) that receives the connector (1, 56, 101, 156),
**characterized in that**
the core inner housing (4) comprises a cuboidal plate (17) provided with passage holes (18, 18') on whose front (23) a double cylinder (16) having the passage holes (18, 18') and extending in the axial direction of the connector (1, 56) is mounted and on whose rear two guide tongues (19, 19') extend in the axial direction for insertion into the rear receiving housing (5), whereby the guide tongues (19, 19') and the receiving housing (5) have reciprocal latching means (21, 22).

2. The connector according to Claim 1, **characterized in that**
the latching means (21, 22) are latching lugs (21) and latching windows (22), whereby the latching lugs (21) are arranged on the guide tongues (19, 19') and the receiving housing (5) has the shape of a housing cube (5) with side walls (23) that each have a latching window (22) into which the latching lugs are capable of latching after the insertion of the guide tongues (19, 19') into the receiving housing (5).

3. The connector according to Claim 1 or 2, **characterized in that**
the receiving housing is made up of two housing shells (44, 144, 144a, 144b) that are arranged one above the other, between which, in order to construct a multiple double connector (56, 156), double units (3-4) consisting of a core housing (3, 103) and a core inner housing (4, 104) are present multiple times in an identical manner and are lined up next to each other, whereby the core inner housings (4) are latched together in the housing shells (44) by means of a latched connection (21, 48, 49), and the double units (3-4) are inserted into a multiple connector housing (43) and float-mounted there, whereby said multiple connector housing (43) consists of a plurality of double connector housings (58, 59) lined up in rows and connected to each other.

4. The connector according to Claim 3, **characterized in that**
at least some of the double connector housings (58, 59) of the multiple connector housing (43) have tabs (13) to unplug to locked connection to the receiving housing (44).

5. The connector according to Claim 1, **characterized in that**
the cuboidal plate is made up of a front cuboidal plate (117a) and a rear cuboidal plate (117b), whereby
• the core inner housing (104) comprises the front cuboidal plate (117a) provided with passage holes (118, 118') and, instead of the two quide tonques, the rear cuboidal plate (117b) that is situated parallel at a distance from said front cuboidal plate (117a) in the direction of the optical waveguide (106a) and that is connected to the front cuboidal plate (117a) by a connecting web (117c), whereby the lateral and vertical dimensions of the connecting web (117c) are less than the lateral and vertical dimensions of the rear cuboidal plate (117b),
• and the receiving housing (105a, 105b, 144, 144a, 144b) consists of two half shells (105a, 105b, 144, 144a, 144b) that can be latched together, whereby on their insides in the area of the front end of the receiving housing (105a, 105b, 144, 144a, 144b), the main surfaces of the two half shells (105a, 105b, 144, 144a, 144b) each have indentations (165, 265) that are capable of receiving the rear cuboidal plate (117b) in a form-fitting manner when the half shells (105a, 105b, 144, 144a, 144b) are latched together.

6. The connector according to Claim 3, **characterized in that**
the receiving housing (144, 144a, 144b) consists of two housing shells (144, 144a, 144b) that are arranged one above the other, between which the double units (103-104) are lined up next to each other, whereby the double units (103-104) as well as the receiving housings (144, 144a, 144b) are inserted into a multiple connector housing (143) and float-mounted there, said multiple connector housing (143) comprising a plurality of double connector housings (158, 159) lined up in rows and connected to each other.

7. The connector according to one of the preceding claims,
**characterized in that**
the core housing (3, 103) has a height of about 6 mm and a width of about 3.5 mm in the direction crosswise to the longitudinal axis of the connector (1, 56, 101, 156).

8. The connector-coupling system with a connector according to one of Claims 1 to 11, **characterized in that**,
when the core housing (3, 103) and the coupling (31, 31', 32, 32', 51, 131, 132, 151 ) are reciprocally latched, the connector housing (2, 43, 102, 143) can be slid in the lengthwise direction of the connector (1, 56, 101, 156) relative to the core housing (3, 103) and to the coupling (31, 31', 32, 32', 51, 131, 132, 151), in order to activate the unplugging protection means in a first position and in order to deactivate the unplugging protection means in a second position, whereby
in the first position, part of the wall of the connector housing (2, 43, 102, 143) is situated in the area of the latching lugs (38, 38', 138) in such a way that the latching lugs (38, 38', 138) of the arms (37, 37', 137') cannot deflect out of the transverse grooves (30, 130), as a result of which the mechanical connection between the connector (1, 56, 101, 156) and the coupling (31, 31', 32, 32', 51, 131, 132, 151) cannot be unplugged by pulling on the optical waveguide (6, 6a, 106d) or on the receiving housing (5, 44, 105, 144, 144a, 144b),
in contrast, in the second position, no part of the wall of the connector housing (2, 43, 102, 143) is situated in the area of the latching lugs (38, 38', 138) so that the latching lugs (38, 38', 138) of the arms (37, 37', 137') can deflect out of the transverse grooves (30, 130), and the mechanical connection between the connector (1, 56, 101, 156) and the coupling (31, 31', 32, 32', 51, 131, 132, 151) can be unplugged by pulling on the optical waveguide (6, 6a, 106d) or on the receiving housing (5, 44, 105, 144, 144a, 144b).

9. The connector-coupling system according to Claim 8,
**characterized in that**, in the second position of the connector housing (2, 43, 102, 143), the latching lugs (38, 38', 138) can deflect out of the transverse grooves (30, 130) **in that** the end areas of the arms (37, 37', 137') facing away from the coupling (31, 31', 32, 32', 51, 131, 132, 151) are capable of engaging recesses (84, 184, 284) in the wall of the connector housing (2, 43, 102, 143).

10. The connector-coupling system according to Claim 8,
**characterized in that**,
in the direction crosswise to the longitudinal axis of the connector (1, 56, 101, 156), the outer coupling housing (31, 31', 131) has a height of about 12 mm and a width of about 6 mm and, in the direction of the longitudinal axis of the connector (1, 56, 101, 156), it has a dimension of 11 mm.

11. The connector-coupling system according to Claim 8,
**characterized in that**,
when the connector (1, 56, 101, 156) is inserted into a coupling (31, 31', 32, 32', 51, 131, 132, 151), the front end of the core housing (3, 103) latches in the coupling (31, 31', 32, 32', 51, 131, 132, 151) as a result of a reciprocal latching (30, 38, 130, 138), whereby the reciprocal latching of the core housing (3, 103) and the coupling (31, 31', 32, 32', 51, 131, 132, 151) relative to the core housing (3, 103) comprise a transverse groove (30, 130) that runs in the narrow side (42, 142) of the core housing (3, 103), whereby the coupling comprises an outer coupling housing (31, 31', 131).and an inner coupling housing (32, 32', 132') that has an essentially cuboidal plate (36) on which two arms (37, 37', 137) rise vertically, at whose ends there are latching lugs (38, 138) that latch in the transverse grooves (30, 130) when the core housing (3, 103) is slid in between the two arms (37, 37', 137') of the inner coupling housing (32, 32', 132').

## Revendications

1. Connecteur (1, 56, 101, 156) pour guide d'ondes optiques (6, 6a, 7, 8, 106d) comprenant un boîtier de connecteur (2, 43, 102, 143) à l'extrémité arrière duquel est introduit un faisceau de fibres optiques (6, 6a, 7, 8, 106 d) comprenant au moins deux fibres optiques (7, 8) et à l'extrémité avant opposée duquel sortent des ferrules (9, 10) dans chacune desquelles est introduite une des fibres optiques (7, 8), les ferrules (9, 10) étant maintenues dans un boîtier de ferrules (3, 4, 103, 104) lequel est mis en place dans le boîtier de connecteur (2, 43, 102, 143) formé en conséquence pour le logement du boîtier de ferrule (3, 4, 103, 104) et les ferrules (9, 10) sont mobiles, équilibrées par ressort dans leur sens axial, le boîtier de ferrule consistant en un boîtier central (3, 103) et en un boîtier intérieur central (4, 104), lesquels sont conformés pour le logement de deux ferrules individuelles (9, 10), les ferrules (9, 10) étant maintenues dans le boîtier central (3, 103) et les extrémités avant des ferrules (9, 10) faisant saillie à l'avant du boîtier central (3, 103) et les extrémités arrière des ferrules (9, 10) faisant saillie dans le boîtier intérieur central (4, 104), le boîtier central (3, 103) et le boîtier intérieur central (4, 104) étant au moins partiellement insérés l'un dans l'autre et le connecteur (1, 56, 101, 156) étant destiné à être mis ensemble avec un boîtier de couplage (31, 31', 131, 32, 32') logeant le connecteur (1, 56, 101, 156), **caractérisé en ce que**
le boîtier intérieur central (4) comprend une plaque parallélépipédique (17) dotée de trous de passage (18, 18'), sur le côté avant (23) de laquelle est posé un cylindre double (16) avec les trous de passage (18, 18') s'étendant dans le sens axial du connecteur (1, 56) et sur le côté arrière de laquelle deux languettes de guidage (19,19') s'étendent dans le sens axial pour l'introduction dans le boîtier de logement arrière (5), les languettes de guidage (19, 19') et le boîtier de logement (5) possédant des moyens d'encliquetage réciproques (21, 22).

2. Connecteur selon la revendication 1, **caractérisé en ce que**
les moyens d'encliquetage (21, 22) sont des taquets d'arrêt (21) et des fenêtres d'arrêt (22), les taquets d'arrêt (21) étant disposés sur les languettes de guidage (19, 19') et le boîtier de logement (5) ayant la forme d'un boîtier parallélépipédique (5) qui possède des parois latérales (23) ayant chacune une fenêtre d'arrêt (22) dans laquelle les taquets d'arrêt sont en mesure de s'encliqueter après l'introduction des languettes de guidage (19, 19') dans le boîtier de logement (5).

3. Connecteur selon l'une des revendications 1 ou 2, **caractérisé en ce que**
le boîtier de logement consiste en deux coquilles de boîtier (44, 144, 144a, 144b) disposées l'une au-dessus de l'autre, entre lesquelles, pour le montage d'un connecteur double multiple (56, 156), des unités doubles (3-4) consistant en un boîtier central (3, 103) et en un boîtier intérieur central (4, 104) sont présentes à plusieurs reprises de façon identique et sont rangées les unes à côté des autres, les boîtiers intérieurs centraux (4) dans les coquilles de boîtiers (44) étant encliquetés les uns dans les autres moyennant un encliquetage (21, 48, 49) et les unités doubles (3-4) étant mises en place et maintenues de façon flottante dans un boîtier à connecteurs multiples (43), lequel consiste en une pluralité de boîtiers de connecteurs doubles (58, 59) alignés et reliés les uns avec les autres.

4. Connecteur selon la revendication 3, **caractérisé en ce que**
au moins une partie des boîtiers à connecteurs doubles (58, 59) du boîtier à connecteurs multiples (43) présente des brides (13) pour défaire le verrouillage avec le boîtier de logement (44).

5. Connecteur selon la revendication 1, **caractérisé en ce que**
la plaque parallélépipédique est formée par une plaque parallélépipédique avant (117a) et une plaque parallélépipédique arrière (117b),
- le boîtier intérieur central (104) comprenant la plaque parallélépipédique avant (117a) dotée de trous de passage (118, 118') et, au lieu des deux languettes de guidage, la plaque parallélépipédique arrière (117 b) reliée à la plaque parrallélépipédique avant (117a) en direction du guide d'ondes optiques (106a) par une traverse de liaison (117c) ayant un écart parallèle à la plaque parallélépipédique avant (117a), et l'extension latérale et verticale de la traverse de liaison (117c) étant plus petite que l'extension latérale et verticale de la plaque parallélépipédique arrière (117b),
- et le boîtier de logement (105a, 105b, 144, 144a, 144b) consistant en deux demi-coquilles encliquetables l'une dans l'autre (105a, 105b, 144, 144a, 144b), les surfaces principales des deux demi-coquilles (105a, 105b, 144, 144a, 144b) présentant sur leurs côtés intérieurs de l'extrémité avant du boîtier de logement (105a, 105b, 144, 144a, 144b) respectivement un évidement (165, 265), lesquels évidements sont en mesure de réceptionner la plaque parallélépipédique arrière (117b) en prise directe lorsque les demi-coquilles (105a, 105b, 144, 144a, 144b) sont encliquetées l'une dans l'autre.

6. Connecteur selon la revendication 3, **caractérisé en ce que**
le boîtier de logement (144, 144a, 144b) consiste en deux coquilles de boîtier (44, 144, 144a, 144b) disposées l'une au-dessus de l'autre, entre lesquelles les unités doubles (103-104) sont rangées l'une à côté de l'autre, les unités doubles (103-104) ainsi que les boîtiers de logement (144, 144a, 144b) étant mis dans un boîtier à connecteurs multiples (143) et maintenus dedans de façon flottante, lequel boîtier comprend une pluralité de boîtiers de connecteurs doubles (158, 159) alignés et reliés les uns avec les autres.

7. Connecteur selon l'une des revendications ci-avant, **caractérisé en ce que**
le boîtier central (3, 103) présente dans le sens travers par rapport à l'axe longitudinal du connecteur (1, 56, 101, 156) une hauteur d'environ 6 mm et une largeur d'environ 3,5 mm.

8. Système de couplage de connecteurs comprenant un connecteur selon l'une des revendications 1 à 11, **caractérisé en ce que**
en cas d'encliquetage réciproque du boîtier central (3, 103) et du couplage (31, 31', 32, 32', 51, 131, 132, 151), le boîtier de connecteur (2, 43, 102, 143) est déplaçable dans le sens longitudinal du connecteur (1, 56, 101, 156) par rapport au boîtier central (3, 103) et au couplage (31, 31', 32, 32', 51, 131, 132, 151) dans le but d'activer une sécurité contre le retrait dans une première position et dans le but de désactiver la sécurité contre le retrait dans une deuxième position,
dans la première position, une partie de la paroi du boîtier de connecteur (2, 43, 102, 143) dans la zone des taquets d'arrêt (38, 38', 138) étant disposée de façon à ce qu'il n'y ait aucune déviation des taquets d'arrêt (38, 38', 138) des bras (37, 37', 137) hors des rainures transversales (30, 130), de sorte que le lien mécanique entre le connecteur (1, 56, 101, 156) et le couplage (31, 31', 32, 32', 51, 131, 132, 151) n'est pas détachable par une traction exercée sur le guide d'ondes optiques (6, 6a, 106d) ou sur le boîtier de logement (5, 44, 105, 144, 144a, 144b),
toutefois dans la deuxième position aucune pièce de la paroi du boîtier de connecteur (2, 43, 102, 143) n'étant disposée dans la zone des taquets d'arrêt (38, 38', 138), de façon à ce qu'une déviation des taquets d'arrêt (38, 38', 138) des bras (37, 37', 137) hors des rainures latérales (30, 130) est donnée et le lien mécanique entre le connecteur (1, 56, 101, 156) et le couplage (31, 31', 32, 32', 51, 131, 132, 151) est détachable par une traction exercée sur le guide d'ondes optiques (6, 6a, 106d) ou sur le boîtier de logement (5, 44, 105, 144, 144a, 144b).

9. Système de couplage de connecteurs selon la revendication 8, **caractérisé en ce que**
dans la deuxième position du boîtier de connecteur (2, 43, 102, 143), la déviabilité des taquets d'arrêt (38, 38', 138) hors des rainures transversales (30, 130) est donnée par le fait que les bras (37, 37', 137) sont en mesure d'avoir prise avec leurs zones d'extrémité opposées au couplage (31, 31', 32, 32', 51, 131, 132, 151) dans des réserves (84, 184, 284) de la paroi du boîtier de connecteur (2, 43, 102, 143).

10. Système de couplage de connecteurs selon la revendication 8, **caractérisé en ce que**
le boîtier de couplage extérieur (31, 31', 131) dans le sens travers à l'axe longitudinal du connecteur (1, 56, 101, 156) présente une hauteur d'environ 12 mm et une largeur d'environ 6 mm et dans le sens de l'axe longitudinal du connecteur (1, 56, 101, 156) une extension de 11 mm.

11. Système de couplage de connecteurs selon la revendication 8, **caractérisé en ce que**
lors de l'insertion du connecteur (1, 56, 101, 156) dans un couplage (31, 31', 32, 32', 51, 131, 132, 151), le boîtier central (3, 103) s'encliquète avec son extrémité avant du fait d'un encliquetage réciproque (30, 38, 130, 138) dans le couplage (31, 31', 32, 32', 51, 131, 132, 151), l'encliquetage réciproque du boîtier central (3, 103) et du couplage (31, 31', 32, 32', 51, 131, 132, 151) comprenant par rapport au boîtier central (3, 103) une rainure transversale (30, 130), laquelle parcourt le boîtier central (3, 103) sur son côté étroit (42, 142), le couplage comprenant un boîtier de couplage extérieur (31, 31', 131) et un boîtier de couplage intérieur (32, 32', 132), lequel présente pour l'essentiel une plaque parallélépipédique (36) sur laquelle s'élèvent à la verticale deux bras (37, 37', 137) aux extrémités desquels sont diposés des taquets d'arrêt (38, 138) qui s'encliquètent lors de l'insertion du boîtier central (3, 103) entre les deux bras (37, 37', 137) du boîtier de couplage intérieur (32, 32', 132) dans les rainures transversales (30, 130).
